# EUROPEAN PATENT APPLICATION

(11) **EP 4 067 684 A1**
(43) Date of publication of application: **05.10.2022**
(21) Application number: 22158430.3
(22) Date of filing: 24.02.2022
(51) Int. Cl.: F16D 55/2265, F16D 55/227, F16D 127/06

(54) **DISC BRAKE**

(30) Priority: 22.03.2021 GB 202103978
(71) Applicant: Meritor Heavy Vehicle Braking Systems (UK) Limited, Cwmbran, Gwent NP44 3XU (GB)
(72) Inventor: Cleary, Sean, Cwmbran, NP44 3XU (GB); Szafnauer, Alex, Cwmbran, NP44 3XU (GB)
(74) Representative: Whitfield, Jack Stephen

(57) **Abstract**

A disc brake (100) for a heavy commercial vehicle is provided. The disc brake comprises a brake carrier (101), a guide surface and a travel limiting arrangement (133a, 133b). The brake carrier receives a first brake pad assembly (103a) for contacting a rotor (104) having a central axis defining an inboard-outboard axial direction during a braking operation to slow the vehicle. The first brake pad assembly comprises a support plate (107a). The first brake pad assembly is configured to slide relative to the guide surface in the axial direction. The travel limiting arrangement (133a, 133b) engages the guide surface and is configured to inhibit any sliding of the first brake pad assembly relative to the guide surface that is above a pre-determined amount, in a first direction that is away from the rotor in the axial direction.

## Description

### FIELD

The present teachings relate to a disc brake for a heavy-commercial vehicle.

### BACKGROUND

Commonly, air-actuated heavy-vehicle disc brakes include a brake carrier, a brake caliper, an inboard brake pad and an outboard brake pad. In use, the brake carrier straddles a brake rotor and the brake pads are positioned on opposing sides of said brake rotor. Typically, the brake caliper is arranged to freely slide on guide pins relative to the brake carrier, and the brake pads are secured to the brake caliper. As such, during a braking operation, under the action of a brake actuator, the brake pads can move relative to the brake carrier, such that friction material on each brake pad contacts the brake rotor.

Outside of a braking operation, the brake actuator is released, and the brake pads are typically 'pushed' away from the rotor back to a rest position due to the rotor being slightly uneven or having a degree of runout. However, at least one of the brake pads may contact the brake rotor unintentionally. Such unintentional contact between the brake pads and the brake rotor may be caused by, for example, engine vibration or cornering forces. Contact between the brake rotor and the brake pads outside of a braking operation can lead to lower vehicle efficiency and higher fuel consumption, as well as reducing the life of the brake pads due to increased wear of the friction material.

Existing systems for positive pad retraction can help to ensure that the brake pads are pushed away from the rotor after a brake operation, but they are typically located in an intermediate position between the inboard and outboard brake pads so cannot account for differential brake pad and rotor wear, when the inboard and outboard brake pads, and opposite surfaces of the rotor, wear at different rates. Such positive pad retraction systems are also difficult to align and locate, due to, for example, machining tolerances.

The present teachings seek to overcome, or at least mitigate the problems of the prior art.

### SUMMARY

A first aspect of the invention provides a disc brake for a heavy commercial vehicle. The disc brake comprises:
a rotor having a central axis defining an inboard-outboard axial direction;
a brake carrier receiving a first brake pad assembly for contacting the rotor during a braking operation to slow the vehicle, the first brake pad assembly comprising a support plate;
a guide surface, the first brake pad assembly being configured to slide relative to the guide surface in the axial direction; and
a travel limiting arrangement engaging the guide surface and being configured to inhibit any sliding of the first brake pad assembly relative to the guide surface that is above a pre-determined amount, in a first direction that is away from the rotor in the axial direction.

As the sliding of the first brake pad assembly relative to the guide surface is inhibited in a first direction, the clearance between the first brake pad assembly and the rotor can be controlled after a brake operation. Specifically, as the first brake pad assembly is moved away from the rotor, the movement of the first brake pad assembly can be inhibited after a pre-determined amount of sliding of the first brake pad assembly relative to the guide surface. The pre-determined amount of sliding can be configured to correspond to an optimal clearance between the first brake pad assembly and the rotor.

In one embodiment, the guide surface may be located on the brake carrier.

The travel limiting arrangement may be a lock arrangement. The lock arrangement may comprise a locking element that engages the guide surface. The locking element may have an unengaged condition where the locking element is free to slide relative to the guide surface; and an engaged condition where relative sliding between the locking element and the guide surface is inhibited. The lock arrangement may be configured such that any sliding of the first brake pad assembly relative to the guide surface that is above a pre-determined amount, in the first direction, causes the locking element to be in the engaged condition and further relative sliding of the first brake pad assembly and the guide surface to be inhibited.

Having a locking element with an engaged and unengaged condition is a simple way to control relative movement of the first brake pad assembly and the guide surface.

The lock arrangement may further comprise a bush fixed relative to the support plate and arranged between the support plate and the locking element. The bush may define a chamber that locates at least a portion of the locking element.

The locking element may comprise a head portion and a tail portion, wherein when the head portion is contacted, the locking element is in the unengaged condition, and when the tail portion is contacted, the locking element is in the engaged condition.

By controlling when the head portion and tail portion are contacted, the relative sliding of the guide surface and first brake pad assembly can be controlled.

When the support plate moves in the second direction towards the rotor, the bush may contact the head portion such that the locking element is in the unengaged condition. When the support plate moves in the first direction away from the rotor, any sliding of the first brake pad assembly relative to the guide surface that is above a pre-determined amount may cause the bush to contact the tail portion of the locking element, so the locking element is in the engaged condition and the locking ring is inhibited from sliding along the guide surface.

The lock arrangement can be configured so that the bush automatically controls when the locking element is in the engaged and unengaged conditions.

The tail portion of the locking element may comprise a high friction surface. The high friction surface may comprise extending teeth configured to contact the guide surface when the tail portion is in the engaged condition, increasing friction between the locking element and the guide surface to inhibit relative movement of the locking element and the guide surface.

The tail portion of the locking element may comprise two or more engaging portions axially separated from one another. Each engaging portion may be biased away from the guide surface.

The chamber of the bush may comprise a ramped portion. The tail portion of the locking element may be located within the chamber such that any sliding of the first brake pad assembly relative to the guide surface that is above a pre-determined amount causes the ramped portion of the bush to contact the tail portion of the locking element to move the engaging portions such that they contact the guide surface.

The bush is configured such that the ramped portion contacts the engaging portions only after a predetermined amount of sliding, such that the relative movement of the locking element and the guide surface is only inhibited when a desired pad clearance is reached.

The disc brake may further comprise a guide rail projecting from the brake carrier in the axial direction, wherein the guide surface is on the guide rail, such that the first brake pad assembly can slide along the guide rail in the axial direction.

By locating the guide surface on a guide rail projecting from the carrier, the risk of interference of the lock arrangement with the normal function of the brake is reduced.

The guide rail may project from the brake carrier in the direction of the rotor. In other words, the guide rail may project towards the rotor in the axial direction.

Advantageously, by projecting from the carrier in the direction of the rotor, it can be ensured that the guide rail is located remote from the brake actuation arrangement and brake adjuster arrangement of the disc brake, which further reduces the risk of interference and helps to minimise the footprint of the disc brake as an area that is normally wasted space is utilised. The guide rail can also more easily be retrofitted to existing disc brakes.

The locking element of the lock arrangement may be a locking ring that is located on the guide rail.

Having a locking element that is a locking ring with an engaged and unengaged condition is particularly suitable when the first brake pad assembly slides along a guide rail.

The brake carrier may comprise a window for locating the first brake pad assembly. The window may be defined by first and second radial abutment surfaces for restraining motion of the first brake pad assembly in the radial direction and opposing first and second circumferential abutment surfaces for restraining motion of the first brake pad assembly in the circumferential direction. The carrier may further comprise a lug projecting radially outwardly of the first circumferential abutment surface. The guide rail may extend from the lug towards the rotor in a second direction that is opposite the first direction.

Locating the guide rail radially outward of the carrier and the lug axially away from the rotor helps to ensure that they do not interfere with operation of the brake. The location also helps to ensure that it is simple to install and replace the first and second brake pad assemblies as required.

The first radial abutment surface and the first circumferential abutment surface may terminate in the axial direction adjacent the rotor at a first machined surface extending parallel to and facing the rotor. The second radial abutment surface and the second circumferential abutment may terminate in the axial direction adjacent the rotor at a second machined surface that is co-planar with the first machined surface. The guide rail may terminate substantially level with the first and second machined surfaces.

This helps to ensure that the guide rail is of sufficient length to perform its function even as the brake pads and the rotor wear, and the brake has been adjusted so the tappet is closer to the rotor, but also prevents the guide rail from interfering with the function of the rotor.

The first brake pad assembly may comprise a first backplate, first friction material mounted on the first backplate and a separate spreader plate configured to engage the first backplate to urge it towards the rotor in the axial direction during the braking operation. The spreader plate may be the support plate. The spreader plate may comprise a circumferentially extending ear that is arranged to locate radially above the first circumferential abutment surface of the brake carrier, so the spreader plate can engage the guide rail.

The spreader plate helps to distribute the load evenly across the first brake pad when the brake is actuated, and the circumferentially extending ear enables the spreader plate to engage the guide rail without the ear interfering with sliding of the first brake pad assembly.

The spreader plate may be integral with a tappet of the disc brake.

As the spreader plate engages the radial and circumferential abutment surfaces of the carrier, it helps to guide the actuation of the tappet during a braking operation.

A guide bore may be located on the support plate of the first brake pad assembly. The guide bore may receive the guide rail such that the first brake pad assembly can slide on the guide rail in the axial direction.

The bush may have a reduced diameter portion that locates in the corresponding bore of the first support plate.

Such a push fit arrangement is simple and helps to ensure that the lock arrangement moves together with the first support plate during a brake operation.

The lock arrangement may comprise a manual release arrangement to disengage the locking ring.

This enables the lock arrangement to be overcome, for example during a manual rewind operation on the tappet when the first brake pad is to be removed.

The lock arrangement may lock the location of first brake pad in the first and second axial directions when the desired clearance is reached.

This may help prevent undesired movement of the caliper relative to the carrier caused by vibrations during use, when there is a desired running clearance between each brake pad and a brake rotor. As such, the lock arrangement can help to prevent the brake pads from contacting the brake rotor unintentionally. Moreover, when the lock arrangement is operated to inhibit relative sliding between the caliper and the brake carrier, the lock arrangement may also act to dampen undesirable vibrational effects, such as a rattling sound caused by the guide pin abutting against the caliper due to engine vibration for example.

The guide rail may be secured to the carrier with a push fit.

To install the guide rail, it can simply be inserted into a corresponding bore made in the carrier, resulting in an arrangement that is easy to manufacture, assemble and even retrofit to existing disc brakes.

The travel limiting arrangement may alternatively comprise a resiliently biased element configured to be compressed during the braking operation and extend after the braking operation to a predetermined extent in order to inhibit any sliding of the first brake pad assembly relative to the guide surface that is above the pre-determined amount in the first direction.

After a braking operation, the resiliently biased element can help move the first brake pad assembly away from the rotor, but only to a limited extent: after a predetermined amount of sliding of the first brake pad assembly relative to the guide surface, the resiliently biased element reaches its extension limit and inhibits any further sliding of the first brake pad assembly relative to the guide surface.

The resiliently biased element may be configured to compress and extend within an axial range of approximately half of a desired clearance between the first brake pad assembly and the rotor.

Half of the desired clearance (about 0.5mm) is a suitable clearance and assists in producing a suitable clearance on both sides of the rotor.

The resiliently biased element may be a coil spring.

The travel limiting arrangement may further comprise a slidable element configured to frictionally engage the guide surface such that the slidable element can only slide relative to the guide surface when a frictional force between the slidable element and the guide surface is overcome. The resiliently biased element may be fixed to the slidable element and first brake pad assembly.

The slidable element acts as a reaction surface for the resiliently biased element when it extends after a braking operation, resulting in the first brake pad assembly being urged away from the rotor. However, the resiliently biased element can only extend a limited extent before it reaches an extension limit. At the extension limit, the first brake pad assembly can no longer move away from the rotor as it is fixed to the resiliently biased element, which is fixed to the slidable element. The slidable element does not slide relative to the guide surface as the force of the resiliently biased element is not sufficient to overcome the frictional force between the slidable element and the guide surface. When an adjustment mechanism of the brake moves the first brake pad assembly towards the rotor in an adjustment operation, the resiliently biased element will only be able to compress a pre-determined amount before it cannot compress any more (e.g. if the resilient element is a coil spring, it becomes coil bound). When the resiliently biased element can compress no more, the force applied by the adjustment mechanism to the first brake pad assembly to move it towards the rotor will be transferred to the slidable element, overcoming the frictional force and sliding the slidable element relative to the guide surface towards the rotor, to reduce the clearance between the first brake pad assembly to an acceptable level.

The travel limiting arrangement may comprise a stop formation and an engagement formation. The engagement formation may be configured to engage the stop formation to inhibit any sliding of the first brake pad assembly relative to the guide surface that is above the pre-determined amount in the first direction.

The amount of sliding required before the engagement formation engages the stop formation can be carefully controlled, such that it corresponds to the amount of sliding of the first brake pad assembly that creates a sufficient clearance between the first brake pad assembly and the rotor.

The travel limiting arrangement may further comprise a slidable element configured to frictionally engage the guide surface such that the slidable element can only slide relative to the guide surface when a frictional force between the slidable element and the guide surface is overcome. In other words, the slidable element may be fixed relative to the guide surface until a sufficient force is applied that can overcome the frictional force.

The engagement formation may be fixed relative to the first brake pad assembly. The stop formation may be fixed relative to the slidable element.

As the first brake pad assembly moves away from the rotor after a braking operation, after the first brake pad assembly has slid relative to the guide surface the predetermined amount in the first direction, the engagement formation engages the stop formation to inhibit any further sliding.

The first brake pad assembly may comprise a projection extending from the first brake pad assembly. The projection may comprise the engagement formation.

The engagement formation may be on a flange portion of the projection. The slidable element may comprise a region with an opening configured to receive the flange portion of the projection. The opening may have a lip configured to act as the stop formation and be engaged by the flange portion to inhibit any sliding of the first brake pad assembly relative to the guide surface that is above the pre-determined amount in the first direction.

The flange portion can slide relative to the slidable element within the chamber of the slidable element until the first brake pad assembly has slid relative to the guide surface the pre-determined amount in the first direction, causing the flange portion to engage the lip of the slidable element to inhibit any further sliding. This is a simple arrangement to control the amount of sliding of the first brake pad assembly relative to the guide surface.

The disc brake may further comprise a guide rail projecting from the brake carrier.

The guide rail may project from the brake carrier in the direction of the rotor. In other words, the guide rail may project towards the rotor in the axial direction.

Advantageously, by projecting from the carrier in the direction of the rotor, it can be ensured that the guide rail is located remote from the brake actuation arrangement and brake adjuster arrangement of the disc brake, which further reduces the risk of interference and helps to minimise the footprint of the disc brake as an area that is normally wasted space is utilised. The guide rail can also more easily be retrofitted to existing disc brakes.

The guide surface may be on the guide rail, such that the first brake pad assembly can slide along the guide rail in the axial direction. The slidable element may be received on the guide rail.

The guide rail may have a first portion projecting from a first part of the brake carrier on a first side of the rotor. The first portion may project in a radially outward direction. The guide rail may further comprise a second portion extending axially across the rotor towards a second side of the rotor.

This location enables the guide rail to be easily retrofitted to existing disc brakes and helps to ensure that the guide rail does not contact other components of the disc brake and does not interfere with the rotor or the braking operation.

The guide rail may be received in a second part of the brake carrier on a second side of the rotor.

This helps to reduce the risk that the guide rail contacts the rotor under gravity or due to vibration or brake forces during the life of the disc brake.

The first brake pad assembly may comprise a sleeve portion projecting in a second direction toward the rotor. The sleeve portion may engage the guide rail such that the first brake pad assembly can slide along the guide rail in the axial direction.

The sleeve portion may be the projection of the first brake pad assembly. The slidable element may be an annular collar that locates on the guide rail.

The guide rail may have an intermediate portion between the first and second portions. The intermediate portion of the guide rail may extend in a circumferentially inwardly direction.

This helps to ensure that the guide rail can contact the sleeve portion of the first brake pad assembly without the sleeve portion requiring complex geometry. The intermediate portion also allows the majority of the guide rail to be circumferentially offset from the first brake pad assembly, reducing the risk of the guide rail interfering with the first brake pad assembly or other components of the disc brake. This location also helps to ensure that it is simple to install and replace the first and second brake pad assemblies as required.

The disc brake may further comprise a caliper configured to slide relative to the brake carrier. The caliper may comprise a pad retainer extending axially across an aperture of the caliper to retain the first brake pad assembly. The guide surface may be located on the pad retainer.

The pad retainer can act as the guide surface to be engaged by the travel limiting arrangement, utilising space within the disc brake that is typically not used.

The travel limiting arrangement may comprise a slidable element configured to frictionally engage the pad retainer such that the slidable element can only slide relative to the pad retainer when a frictional force between the slidable element and the pad retainer is overcome.

The disc brake may further comprise a carrier frame structure fixed relative to the brake carrier. The slidable element may be configured to engage the carrier frame structure.

The slidable element may have at least one radially extending wall.

The slidable element may comprise an engagement formation. The carrier frame structure may comprise a stop formation. The engagement formation may be configured to engage the stop formation to inhibit any sliding of the first brake pad assembly relative to the pad retainer that is above the pre-determined amount in the first direction.

The engagement formation may be on the radially extending wall. The radially extending wall may be a first radially extending wall. The slidable element may further comprise a second radially extending wall.

The first and second walls can engage the stop formation of the carrier frame structure to limit movement of first brake pad arrangement in both directions after the braking operation.

The carrier frame structure may be a support bar extending circumferentially to engage circumferentially opposite sides of the carrier. The support bar may be located radially inwardly of the pad retainer. The radially extending wall may extend from the slidable element in a radially inwardly direction so that the slidable element can contact the support bar.

As the slidable element contacts the support bar radially inwardly of the pad retainer, the space required to locate the disc brake can be minimised

The slidable element may be a clip that is received on the pad retainer.

A clip is easy to install and can be retained on the pad retainer without requiring separate fastening members.

The clip may have at least one resiliently biased engaging arm to contact the pad retainer. The clip may have first and second resiliently biased engaging arms to contact the pad retainer. The first and second engaging arms may oppose one another circumferentially.

The slidable element may comprise a sealing arrangement to inhibit contamination of engaging surfaces of the slidable element and the pad retainer.

The sealing arrangement may comprise a housing surrounding the slidable element. The sealing arrangement may comprise a sealing boot fixed to the slidable element and the pad retainer.

The disc brake may further comprise a resiliently biased element arranged fixed to the radially extending wall of the slidable element and the carrier frame structure. The resiliently biased element may be configured to extend by a predetermined extent after a braking operation, to inhibit any sliding of the first brake pad assembly relative to the guide surface that is above the pre-determined amount in the first direction.

The disc brake may further comprise a positive pad retraction arrangement to urge the first brake pad away from the rotor after a brake operation. The positive pad retraction arrangement may include a biasing element.

Having a positive pad retraction arrangement helps to ensure that the first brake pad is moved away from the rotor to create the clearance.

The biasing element may be configured to extend after a braking operation to urge the first brake pad assembly away from the rotor in the first direction.

The biasing element may be arranged between the caliper and the brake carrier. The biasing element may be configured to extend after a braking operation to move the caliper relative to the carrier away from the rotor in the first direction.

As the biasing element is arranged between the caliper and the first brake pad assembly, the biasing element is compressed during a braking operation, creating a force to urge the first brake pad assembly away from the rotor after the braking operation. The biasing element may be a spring. The spring may be a coil spring having a first end and a second end.

The first end can engage a surface of the caliper and the second end can engage an opposing surface of the brake carrier.

The biasing element may be located between a guide pin of the disc brake and the caliper.

The guide surface may be a first guide surface. The travel limiting arrangement may be a first travel limiting arrangement. The disc brake may further comprise a second guide surface and a second travel limiting arrangement located circumferentially opposite the first guide surface and first travel limiting arrangement respectively.

By having corresponding arrangements on both circumferential sides of the disc brake, the clearance can be more carefully controlled across the entire brake pad, helping to reduce differential pad wear from an inconsistent pad clearance during the life of the disc brake.

The disc brake may further comprise a caliper that slides relative to the brake carrier and a second brake pad assembly, wherein during the braking operation, one of the first or second brake pad assemblies is brought into contact with the rotor and sliding of the caliper relative to the carrier causes the other of the first and second brake pad assemblies to also come in contact with the rotor. The first brake pad assembly may be an inboard brake pad assembly, located on an inboard side of the rotor. The second brake pad assembly may be an outboard brake pad assembly, located on an outboard side of the rotor. The outboard brake pad assembly may be engaged by the caliper to bring it in contact with the rotor.

During a braking operation, a tappet is actuated, causing the first brake pad assembly or the second brake pad assembly to engage the rotor. Once the first brake pad assembly or the second brake pad assembly is in contact with the rotor, it can move no further, creating a reaction force that causes the caliper to slide relative to the carrier. At the opposite side of the rotor, the caliper is engaging the other of the first or second brake pads, causing it to also be brought in contact with the rotor. After the braking operation, this is reversed, therefore, as the clearance can be controlled by inhibiting movement of the first brake pad assembly relative to the guide surface, the caliper will slide in the opposite direction, creating a corresponding clearance on the opposite side of the rotor.

The first brake pad assembly may be an inboard brake pad assembly, located on an inboard side of the rotor. The second brake pad assembly may be an outboard brake pad assembly, located on an outboard side of the rotor. The outboard brake pad assembly may be engaged by the caliper to bring it in contact with the rotor.

The travel limiting arrangement can specifically be located on the inboard side of the rotor. Therefore, after a brake operation, only the inboard pad clearance needs to be controlled to result in a corresponding outboard pad clearance as the caliper slides relative to the carrier once the pre-determined amount of sliding between the first brake pad assembly and the guide surface is reached.

The travel limiting arrangement may be configured to directly inhibit the sliding of the first brake pad assembly relative to the brake carrier. The travel limiting arrangement may be configured to not directly inhibit the sliding of the second brake pad assembly relative to the brake carrier.

The travel limiting arrangement is simple as it only needs to actively control the location of the first brake pad assembly relative to the brake carrier to help ensure a suitable clearance between the first brake pad assembly, the second brake pad assembly, and the rotor after the braking operation.

A second aspect provides a brake assembly for use in the disc brake of the previous aspect, the brake assembly comprising:
a brake carrier receiving a first brake pad assembly for contacting the rotor during a braking operation to slow the vehicle, the first brake pad assembly comprising a support plate;
a guide surface, the first brake pad assembly being configured to slide relative to the guide surface in the axial direction; and
a travel limiting arrangement engaging the guide surface and being configured to inhibit any sliding of the first brake pad assembly relative to the guide surface that is above a pre-determined amount, in a first direction that is away from the rotor in the axial direction.

### BRIEF DESCRIPTION OF THE DRAWINGS

Embodiments are now disclosed by way of example only with reference to the drawings, in which:
Figure 1 is an isometric view of a disc brake according to a first embodiment;
Figure 2 is a plan view of the disc brake of Figure 1,
Figure 3 is an isometric view of a carrier, spreader plate and tappet of the disc brake of Figure 1, with the other features not shown, for clarity;
Figure 4 is a cross-sectional view of the disc brake of Figure 1 in the 4-4 plane;
Figure 5 is a magnified view of section A of Figure 4; and
Figure 6 is a magnified view of a first guide rail, first locking ring, and partial view of the carrier of the disc brake of Figure 1, with the other features not shown, for clarity.
Figure 7 is an isometric view of a disc brake according to a second embodiment;
Figure 8 is a plan view of the disc brake of Figure 7;
Figure 9 is a magnified view of section B of Figure 8;
Figure 10 is a cross-sectional view of the disc brake of Figure 8 in the 10-10 plane;
Figure 11 is a magnified view of section C of Figure 10;
Figure 12 is an isometric view of a disc brake, part-sectioned at a plane 12-12, according to a third embodiment;
Figure 13 is a side view of the disc brake of Figure 12;
Figure 14 is a magnified view of section D of Figure 13;
Figure 15 is an isometric view of a disc brake according to a fourth embodiment;
Figure 16 is an isometric view of the disc brake of Figure 15, part-sectioned at a plane 16-16;
Figure 17 is a magnified view of section E of Figure 16;
Figure 18 is a schematic cross-sectional view of a disc brake through an axial plane according to a fifth embodiment;
Figure 19 is a magnified view of section F of Figure 18;
Figure 20 is a schematic cross-sectional view of a disc brake through an axial plane according to a sixth embodiment; and
Figure 21 is a magnified view of section G of Figure 20.

### DETAILED DESCRIPTION OF EMBODIMENT(S)

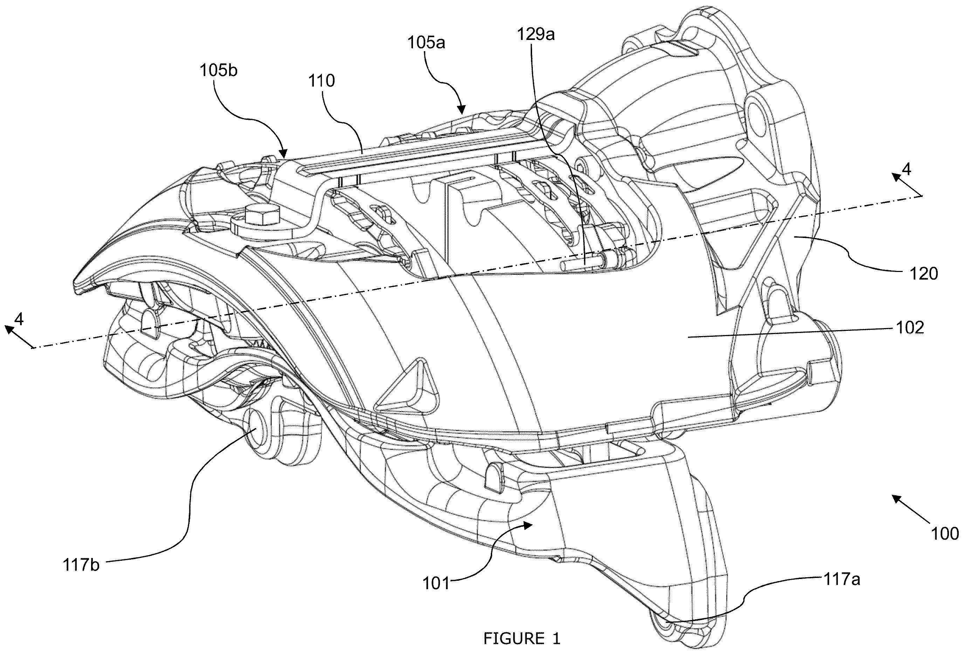

Figures 1 to 4 show a disc brake 100 for a heavy commercial vehicle according to a first embodiment. The disc brake 100 includes a caliper 102 slidably mounted with respect to a brake carrier 101 by a first guide assembly 112a and a second guide assembly 112b. The first guide assembly 112a and the second guide assembly 112b are conventional guide assemblies having guide sleeves and guide pins fixed to the carrier as known in the art, with a function of enabling smooth relative sliding of the caliper 102 on the brake carrier 101, and will not be described in any more detail. The caliper 102 has a housing 120 typically formed from cast iron or steel. The brake carrier 101 is typically also formed from cast iron or steel.

The brake carrier 101 receives first and second brake pad assemblies. In this embodiment, the first and second brake pad assemblies are an inboard brake pad assembly 103a and an outboard brake pad assembly 103b. In other embodiments, however, the brake carrier 101 may only receive one of the inboard brake pad assembly 103a or the outboard brake pad assembly 103b. For example, the outboard brake pad assembly 103b may be received in the caliper 102.

The inboard brake pad assembly 103a includes an inboard brake pad 105a having a backplate 107a that supports friction material 109a which is mounted to the backplate 107a The outboard brake pad assembly 103b includes an outboard brake pad 105b having a backplate 107b that supports friction material 109b which is mounted to the backplate 107a.

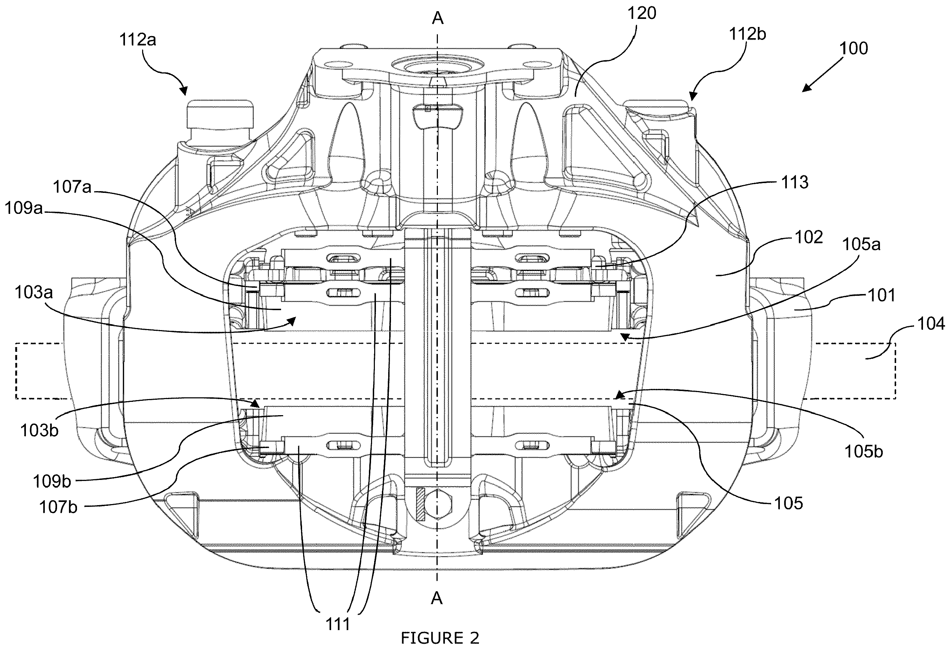

A rotor 104 (see Figure 2), rotatable about a central axis extending in an inboard-outboard axial direction A-A, is rotationally fixed relative to a hub of a wheel of the vehicle (not shown) and positioned between the inboard brake pad assembly 103a and the outboard brake pad assembly 103b. An air actuator (not shown) is provided to move the inboard brake pad assembly 103a towards the rotor during a braking operation via an actuation mechanism (not shown) such that the friction material 109a of the inboard brake pad 105a is brought into frictional contact with the rotor. During a braking operation, when the friction material 109a contacts the rotor 104, a reaction force causes the caliper 102 to slide in the inboard axial direction along the first guide assembly 112a and the second guide assembly 112b. As the caliper 102 slides inboard, it moves the outboard brake pad assembly 103b towards the rotor 104, so the friction material 109a of the outboard brake pad 105b also contacts the rotor 104. Hence, the rotor 104 becomes clamped between the inboard brake pad assembly 103a and the outboard brake pad assembly 103b and the rotation of the rotor 104 is frictionally inhibited, causing the vehicle to slow down.

The caliper 102 defines an aperture 105 arranged to receive the inboard brake pad assembly 103a and the outboard brake pad assembly 103b. Advantageously, the aperture 105 enables the inboard brake pad 105a and the outboard brake pad 105b to be installed and removed in a radial direction, with the rotor in place.

During a braking operation, it is desirable for the inboard brake pad assembly 103a and the outboard brake pad assembly 103b to be located equidistant from the rotor 104, to help ensure that the inboard brake pad assembly 103a, the outboard brake pad assembly 103b and both sides of the rotor 104 wear as evenly as possible over the life of the disc brake 100. In this embodiment, this is achieved by a support plate of the inboard brake pad 105a (described in more detail below) being located at an equal distance from the rotor 104 as a support surface located on the caliper, which engages the outboard brake pad 105b. As the friction material 109a of the inboard brake pad 105a, the friction material 109b of the outboard brake pad 105b and the rotor 104 wear over the life of the disc brake 100, an adjustment mechanism (well-known and not described in detail) is configured to advance the inboard brake pad 105a towards the rotor 104 during a braking operation if the total clearance between the inboard brake pad 105a, the outboard pad 105b and the rotor 104 is greater than desired. The adjustment occurs until the friction material 109a of the inboard brake pad 105a contacts the surface of the rotor 104, at which point the adjustment is stopped. When the disc brake 100 is released at the end of the braking operation, the inboard brake pad 105a and the outboard brake pad 105b are able to move away from the rotor 104, such that there is an inboard pad clearance and an outboard pad clearance. However in certain situations, the total clearance may be unevenly distributed between both the rotor 104 and the respective inboard and outboard brake pads 105a, 105b. As will be described in more detail below, a travel limiting arrangement is provided to help to control the inboard pad clearance and the outboard pad clearance and help to ensure that the clearance is within a desired range. Ideally, the inboard pad clearance and outboard pad clearance are equal to one another, to help ensure equal wear of the inboard brake pad 105a and the outboard brake pad 105b. In this embodiment, the travel limiting arrangement includes a first lock arrangement 133a and a second lock arrangement 133b.

A pad retainer 110, sometimes known as a pad strap, is arranged to extend over the aperture 105 in an axial direction to help retain the inboard brake pad assembly 103a and the outboard brake pad assembly 103b. In this embodiment, the pad retainer 110 is fixed to the housing 120 at the inboard side of the disc brake 100 and can be bolted to the caliper 102 at the outboard side of the disc brake 100 to retain the inboard brake pad assembly 103a and the outboard brake pad assembly 103b, but other known retention arrangements may be used. Due to the aperture 105, the inboard brake pad assembly 103a and the outboard brake pad assembly 103b can be assembled in the disc brake 100 in a radial direction relative to the rotor 104. For example, this enables the inboard brake pad 105a and the outboard brake pad 105b to be removed and replaced when fully worn without the disc brake 100 being disassembled and/or the rotor 104 being removed.

The inboard brake pad assembly 103a further comprises a pad spring 111 arranged between the inboard brake pad assembly 103a and the pad retainer 110. Specifically, the backplate 107a of the inboard brake pad 105a includes radially extending projections that engage corresponding recesses in the pad spring 111. The outboard brake pad assembly 103b further comprises a pad spring 111 is also arranged between the outboard brake pad assembly 103b and the pad retainer 110. The backplate 107b of the outboard brake pad 105b includes radially extending projections that engage corresponding recesses in the pad spring 111. The pad springs 111 act to help bias the inboard brake pad assembly 103a and the outboard brake pad assembly 103b in the radial inward direction as help to dampen their movement, to help prevent rattling of the components in use. In other embodiments, other known biasing arrangements may be utilised.

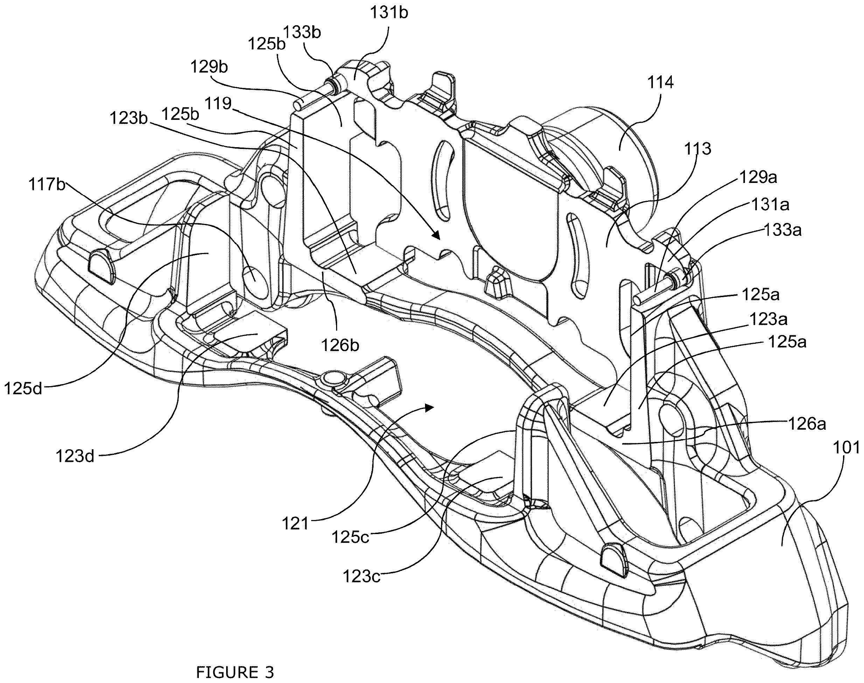

As shown most clearly in Figure 3, in this embodiment, the inboard brake pad assembly 103a also includes a spreader plate 113. The spreader plate 113 is separate to the inboard brake pad 105a, the backplate 107a, the friction material 109a and the pad spring 111. The spreader plate 113 acts as a support plate that helps spread the actuation force more evenly across the whole of the inboard brake pad 105a. A further pad spring 111 is arranged between the spreader plate 113 and the pad retainer 110. In this embodiment, the spreader plate 113 is integral with a tappet 114 (shown best in Figure 3) that actuates as part of the actuation mechanism during a braking operation. It will be appreciated that, in alternative embodiments, the spreader plate 113 could be a separate component that is engaged by a separate tappet. In further alternatives, there may be no spreader plate 113 at all, and instead the backplate 107a of the inboard brake pad 105a would act as the support plate for the inboard brake pad assembly 103a and be engaged directly by the tappet.

The brake carrier 101 has a first mounting portion 117a and a second mounting portion 117b, both configured to be fixed to an axle or steering knuckle (not shown) of a vehicle. On the inboard side of the brake carrier 101 is an inboard window 119 for locating the inboard brake pad assembly 103a. The inboard window 119 has a first radial abutment surface 123a and a second radial abutment surface 123b. The inboard window 119 also has a first circumferential abutment surface 125a and a second circumferential abutment surface 125b. The first circumferential abutment surface 125a opposes the second circumferential abutment surface 125b. The first radial abutment surface 123a, the second radial abutment surface 123b, the first circumferential abutment surface 125a and the second circumferential abutment surface 125b define the inboard window 119. The first radial abutment surface 123a and the second radial abutment surface 123b restrain motion of the inboard brake pad assembly 103a in the radially inward direction. The first circumferential abutment surface 125a and the second circumferential abutment surface 125b restrain motion of the inboard brake pad assembly 103a in the circumferential direction. The first radial abutment surface 123a and the first circumferential abutment surface 125a terminate in the axial direction adjacent the rotor 104 at a first machined surface 126a. The first machined surface 126a extends parallel to and faces the rotor 104. The second radial abutment surface 123b and the second circumferential abutment surface 125b terminate in the axial direction adjacent the rotor 104 at a second machined surface 126b. The second machined surface 126b is co-planar with the first machined surface 126a.

On the outboard side of the brake carrier 101 is an outboard window 121 for locating the outboard brake pad assembly 103b. The outboard window 121 also has a first radial abutment surface 123c and a second radial abutment surface 123d, as well as a first circumferential abutment surface 125c and a second circumferential abutment surface 125d. The first circumferential abutment surface 125c opposes the second circumferential abutment surface 125d. The first radial abutment surface 123c, the second radial abutment surface 123d, the first circumferential abutment surface 125c and the second circumferential abutment surface 125d define the outboard window 121. The first radial abutment surface 123c and the second radial abutment surface 123d restrain motion of the inboard brake pad assembly 103a in the radially inward direction. The first circumferential abutment surface 125c and the second circumferential abutment surface 125d restrain motion of the inboard brake pad assembly 103a in the circumferential direction.

A first lug 127a projects radially outwardly from the first circumferential abutment surface 125a of the brake carrier 101. A second lug 127b projects radially outwardly from the second circumferential abutment surface 125b of the brake carrier.

The disc brake 100 includes at least one guide surface. In this embodiment, the guide surface is located on the carrier. The support plate is configured to engage the guide surface such that the first brake pad assembly can slide along the guide surface in the axial direction. In this embodiment, the disc brake has a first guide surface and a second guide surface. In this embodiment, the first guide surface and the second guide surface are located on the carrier. In this embodiment, projecting from the first lug 127a of the brake carrier 101 in an axial direction towards the rotor 104 is a first guide rail 129a. Projecting from the second lug 127b of the brake carrier 101 in an axial direction towards the rotor 104 is a second guide rail 129b. The first guide surface is located on the first guide rail 129a and the second guide surface is located on the second guide rail 129b. In this embodiment, the first guide rail 129a and the second guide rail 129b are elongate and have a circular cross-section. The first guide rail 129a terminates substantially level with the first machined surface 126a. The second guide rail 129b terminates substantially level with the second machined surface 126b. This helps to ensure that the first guide rail 129a and the second guide rail 129b do not interfere with the rotor 104 during operation of the disc brake 100. In this embodiment, the first guide rail 129a and the second guide rail 129b are separate components that are fixed to the brake carrier 101 with a push-fit. It will be appreciated, however, that any suitable fixing arrangement can be used. For example, the first guide rail 129a and the second guide rail 129b could be threaded to locate in corresponding threaded bores in the brake carrier 101. Alternatively, the first guide rail 129a and the second guide rail 129b could be welded to the brake carrier 101. The first guide rail 129a and the second guide rail 129b could be fixed with adhesive to the brake carrier 101. As a further alternative, the brake carrier 101 could be cast with the first guide rail 129a and second guide rail 129b integrally formed with the brake carrier 101, or the first guide rail 129a and the second guide rail 129b could be machined in a second operation after the brake carrier 101 is formed.

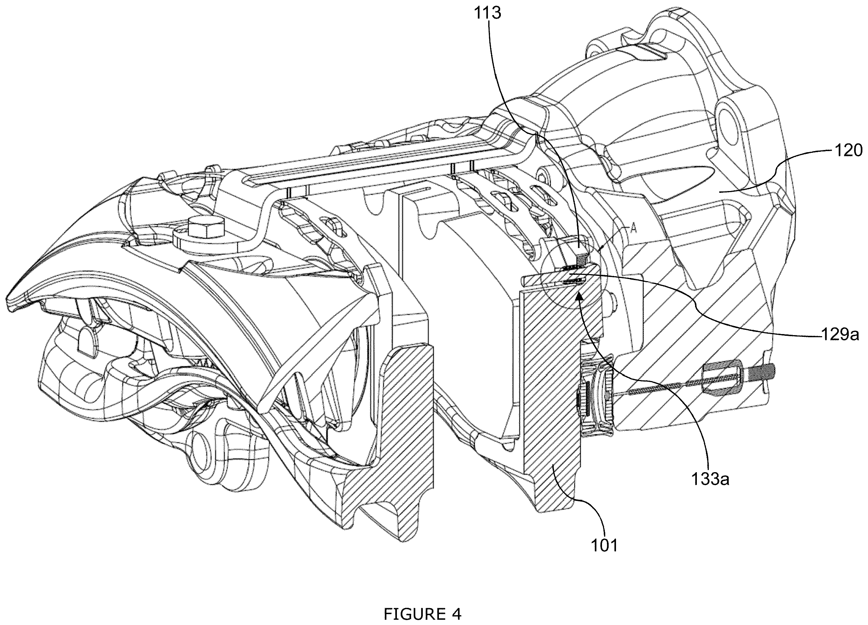

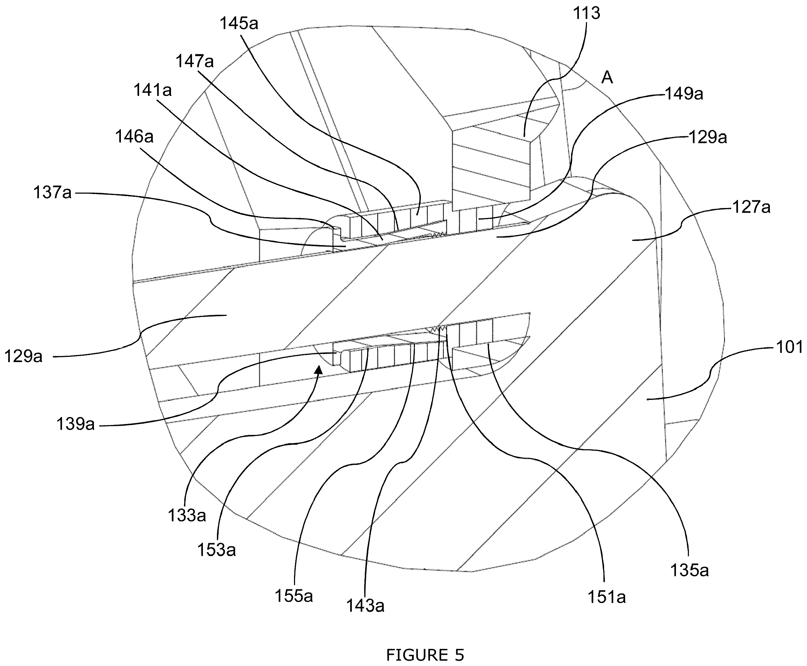

As shown most clearly in Figures 4 and 5, between the support plate and the first guide rail 129a is the first lock arrangement 133a. Between the support plate and the second guide rail 129b is the second lock arrangement 133b. As will be described in more detail below, the first lock arrangement 133a and the second lock arrangement 133b are configured to inhibit any sliding of the inboard brake pad assembly 103a that is above a pre-determined amount, away from the rotor 104 in the axial direction. Generally, the first lock arrangement 133a and the second lock arrangement 133b each have a locking element. The locking element has an unengaged condition where the locking element is free to slide relative to the guide surface (the first guide rail 129a and the second guide rail 129b in this embodiment). The locking element also has an engaged condition where relative sliding between the locking element and the guide surface (the first guide rail 129a and the second guide rail 129b in this embodiment) is inhibited, The first lock arrangement 133a and the second lock arrangement 133b are configured such that any sliding of the first brake pad assembly relative to the guide surface that is above a pre-determined amount, in a direction away from the rotor, causes the locking element to be in the engaged condition and further relative sliding of the first brake pad assembly and guide surface to be inhibited.

In this embodiment, the support plate is the spreader plate 113 and the spreader plate has a first ear 131a and a second ear 131b extending circumferentially from opposite circumferential sides of the spreader plate 113. In this embodiment, the first ear 131a projects such that it locates radially above the first circumferential abutment surface 125a and the second ear 131b projects such that it locates radially above the second circumferential abutment surface 125b. In this embodiment, the first ear 131a has a first guide bore 135a, which is a through bore extending through the entire axial depth of the spreader plate 113. The second ear 131b has a second guide bore 135b, which is also a through bore extending through the entire axial depth of the spreader plate 113. The first guide bore 135a locates on the first guide rail 129a and the second guide bore 135b locates on the second guide rail 129b. This enables the spreader plate 113 to slide in an axial direction relative to the first guide rail 129a and second guide rail 129b. As the spreader plate 113 is engaging the backplate 107a of the inboard brake pad 105a, the entire inboard brake pad assembly 103a can slide in an axial direction relative to the first guide rail 129a and the second guide rail 129b.

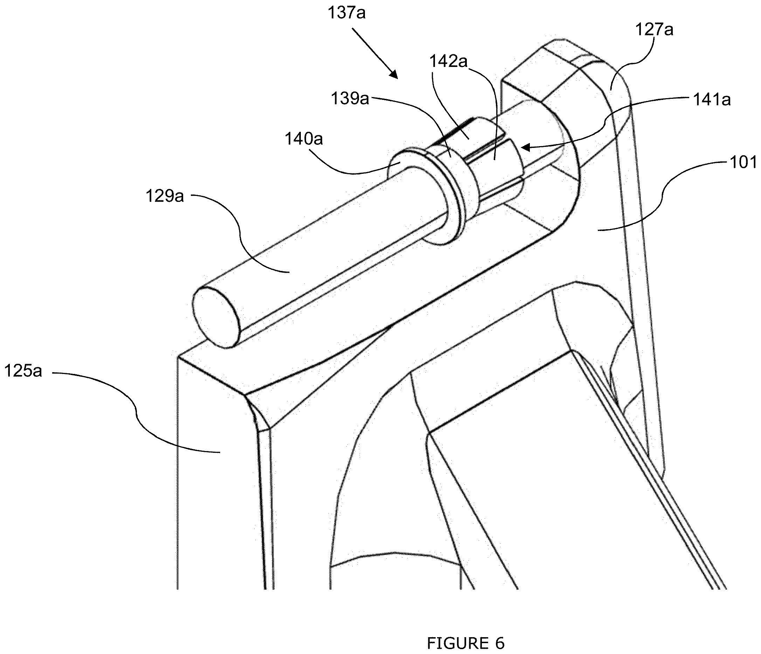

As shown most clearly in Figure 6, in this embodiment, the locking element of the first lock arrangement 133a is a first locking ring 137a that locates on the first guide rail 129a. The first locking ring 137a generally acts as a collet with movable portions that can be urged into contact with the first guide rail 129a when desired, to inhibit relative movement of the first lock arrangement 133a and the first guide rail 129a. The first locking ring 137a includes a through bore such that it can receive the first guide rail 129a and includes a first head portion 139a and a first tail portion 141a. In this embodiment, the first head portion 139a is an annular ring with a flanged end-portion 140a facing the rotor 104 and extending radially from the remainder of the first head portion 139a. In this embodiment, the annular ring is continuous, but in other embodiments the ring could be made up of one or more separate portions, be only part-circular or be any suitable polygonal shape.

The first tail portion 141a tapers radially outwardly from the first head portion 139a and is made up of a plurality of engaging portions 142a, best shown in Figure 6. The engaging portions 142a each extend axially from the first head portion 139a but are separated from one another in the circumferential direction. In this embodiment, each of the engaging portions 142a are resiliently biased in a radial direction away from the first guide rail 129a. Each of the engaging portions 142a includes a surface that is configured to create a high-friction surface, or friction-enhancing surface in other words, that can engage the first guide rail 129. In this embodiment, the friction-enhancing surface is provided by radially extending engaging teeth 143a that project towards the first guide rail 129a. It will be appreciated that in other embodiments, the friction-enhancing surface can be provided by any appropriate means, such as a high-friction material, other projecting or recessed formations in the guide sleeve, or a knurled surface.

Looking at Figure 5, surrounding the non-flanged part of the first head portion 139a and the first tail portion 141a is a first bush 145a. The first bush 145a defines a first bush chamber 147a that locates the non-flanged part of the first head portion 139a and the first tail portion 141a. The first bush 145a has an axial end surface 146a that faces the flanged end-portion 140a of the first head portion 139a. The end surface 146a is, however, axially spaced from the end-portion 140a of the first head portion 139a. The first bush 145a has a first bush securing portion 149a that locates the first bush 145a in the first guide bore 135a of the spreader plate 113, for example with any suitable push-fit arrangement such as an interference fit. The first bush securing portion 149a has a reduced internal diameter and a reduced external diameter relative to the remainder of the first bush 145a. The transition from the internal diameter of the remainder of the first bush 145a to the reduced internal diameter of the first bush securing portion 149a defines a shoulder 151a. The shoulder 151a is configured to abut the first tail portion 141a of the first locking ring 137a when the spreader plate 113 slides towards the rotor 104. The first bush chamber 147a is made up of two portions: a constant diameter entrance bore 153a extending from the end surface 146a and a ramped portion 155a tapering radially outwardly from the entrance bore 153a to the shoulder 151a. The axial length of the entrance bore 153a is configured to substantially correspond to the axial length of the non-flanged portion of the first head portion 139a of the first locking ring 137a. The axial length of the ramped portion 155a is configured to substantially correspond to the axial length of the engaging portions 142a of the first tail portion 141a.

The second lock arrangement 133b is configured in the same way as the first lock arrangement 133a, with the same components except with the suffix 'b' instead of'a'. To avoid unnecessary repetition, the second lock arrangement 133b will not be described in detail, but includes the following features: a second locking ring 137b, a second head portion 139b, a flanged end portion 140b, a second tail portion 141b, engaging portions 142b, engaging teeth 143b, a second bush 145b, an end surface 146b, a second bush chamber 147b, a second bush securing portion 149b, a shoulder 151b, an entrance bore 153b, and a ramped portion 155b.

Operation of the disc brake 100 and, specifically, of the first lock arrangement 133a and the second lock arrangement 133b will now be described.

During a braking operation, as the tappet 114 actuates in the direction of the rotor, the spreader plate 113 engages the backplate 107a of the inboard brake pad 105a to urge the inboard brake pad 105a towards the rotor 104, such that the friction material 109a of the inboard brake pad 105a contacts the rotor 104. As the friction material 109a of the inboard brake pad 105a contacts the rotor 104, the tappet 114 and the inboard brake pad assembly 103a will no longer advance. Instead, a reaction force passes through the inboard brake pad assembly 103a and is transmitted to the caliper 102, causing the caliper 102 to slide relative to the brake carrier 101 in the inboard axial direction. The outboard brake pad assembly 103b is engaged by the caliper 102, causing the outboard brake pad 105b to be moved in the direction of the rotor 104, and the friction material 109b of the outboard brake pad 105b comes into contact with the rotor 104, further restricting its rotation and slowing the vehicle.

After a braking operation, it is desired that the inboard brake pad assembly 103a and the outboard brake pad assembly 103b are moved away from the rotor 104 completely, as any contact of the friction material 109a of the inboard brake pad 105a or the friction material 109b of the outboard brake pad 105b with the rotor 104 will cause drag, leading to inefficiency of the vehicle due to the frictional forces that must be overcome to accelerate as well as premature wearing of the brake pads and rotor, which must then be replaced earlier than otherwise necessary.

A return spring (not shown) is biased to retract the tappet 114 when the disc brake 100 is no longer being actuated. The inboard brake pad assembly 103a and the outboard brake pad assembly 103b typically move away from the rotor 104 due to the uneven surface of the rotor and low resistance of the first guide assembly 112a and second guide assembly 112b to sliding of the caliper 102, meaning only a small axial force is needed in order for the caliper 102 to slide relative to the brake carrier 101 in the opposite axial direction as during a braking operation. Nevertheless, positive pad retraction systems are now becoming more common, to help ensure that the inboard pad assembly 103b and the outboard brake pad assembly 103b are moved away from the rotor 104 after a braking operation. However, although the positive pad retraction systems act simultaneously on both the inboard brake pad assembly 103a and the outboard brake pad assembly 103b, both are not always moved an equal amount. In practice, for example, the inboard brake pad assembly 103a may be moved to a distance away from the rotor 104 after a braking operation such that the pad clearance between the friction material 109a of the inboard brake pad 105a and the rotor 104 is greater than desired. At the same time, the outboard brake pad assembly 103b may be moved to a distance away from the rotor 104 after a braking operation such that the pad clearance between the friction material 109b of the outboard brake pad 105b and the rotor 104 is not sufficient, and the risk of contact and resulting drag between the outboard brake pad assembly 103b and the rotor 104 is still high.

The first lock arrangement 133a and the second lock arrangement 133b are configured to inhibit any sliding of the inboard brake pad assembly 103a relative to the first guide rail 129a and the second guide rail 129b that is above a pre-determined amount, in an inboard axial direction away from the rotor. In other words, once the desired pad clearance between the inboard brake pad assembly 103a and the rotor 104 is reached, the inboard brake pad assembly 103a can slide no further in the axially inboard direction. This results in an appropriate pad clearance between the inboard brake pad assembly 103a and the rotor 104. Further, as the inboard brake pad assembly 103a is now inhibited from any further sliding in the axially inboard direction, any positive pad retraction system that is acting on the inboard brake pad assembly 103a and the outboard brake pad assembly 103b will now transfer more force to the outboard brake pad assembly 103b, increasing the pad clearance between the outboard brake pad assembly 103b and the rotor 104, and significantly reducing the risk of drag between the outboard brake pad assembly 103b and the rotor 104. Again, as there is a low resistance of the first guide assembly 112a and second guide assembly 112b to sliding of the caliper 102, only a small axial force is needed in order for the caliper 102 to slide relative to the brake carrier 101, so the force that needs to be applied by the positive pad retraction system can be relatively small. It can be seen, therefore, that by controlling the amount of sliding of the inboard brake pad assembly 103a relative to the first guide rail 129a and the second guide rail 129b, the first lock arrangement 133a and the second lock arrangement 133b enable the pad clearance between the rotor 104 and the inboard brake pad assembly 103a and between the rotor 104 and the outboard brake pad assembly 103b to be controlled.

In this embodiment, the first lock arrangement 133a functions as follows. The function of the second lock arrangement 133b will not be described in detail to avoid unnecessary repetition, as it is identical to the function of the first lock arrangement 133a, except that it acts between the second guide rail 129b and the inboard brake pad assembly 103a rather than between the first guide rail 129a and the inboard brake pad assembly 103a.

When the tappet 114 is actuated, an actuation force is transmitted via the spreader plate 113 to the inboard brake pad 105a. As the tappet 114 is actuated, therefore, it can be seen that the spreader plate 113 will move in the axial direction towards the rotor. As the first guide bore 135a receives the first guide rail 129a, the spreader plate 113 slides along the first guide rail 129a as the tappet 114 is actuated. The first bush securing portion 149a of the first bush 145a locates in the first guide bore 135a between the spreader plate 113 and the first guide rail 129a, such that the first bush 145a is fixed relative to the spreader plate 113. The first bush 145a is formed of a low-friction material such that it can freely slide relative to the first guide rail 129a. As the spreader plate 113 slides axially relative to the first guide rail 129a towards the rotor 104, the shoulder 151a of the first bush 145a contacts the engaging portions 142a of the first locking ring 137a such that the first locking ring 137a also slides axially relative to the first guide rail 129a towards the rotor 104. The first locking ring 137a is also formed of a low-friction material such that it can freely slide relative to the first guide rail 129a. In this way, the inboard brake pad assembly 103a is free to move towards the rotor 104 when the disc brake 100 is actuated, to slow the vehicle.

After the braking operation, however, the tappet 114 is retracted by the return spring, allowing the spreader plate 113 to move axially relative to the first guide rail 129a away from the rotor 104. As the first bush 145a is fixed to the spreader plate 113, it also moves away from the rotor 104 as the tappet 114 is retracted. The first locking ring 137a, however, is not fixed relative to the spreader plate 113. Accordingly, as the spreader plate 113 and the first bush 145a move axially relative to the first guide rail 129a away from the rotor, the first bush 145a moves relative to the first locking ring 137a. As the first bush 145a moves relative to the first locking ring 137a, the ramped portion 155a of the first bush 145a causes the engaging portions 142a to move in a radially inward direction, such that the engaging teeth 143a contact the first guide rail 129a. This contact inhibits any relative axial movement of the first locking ring 137a and the first guide rail 129a. Additionally, once the engaging teeth 143a of the first locking ring 137a are in contact with the first guide rail 129a, the first bush 145a is also inhibited from any further axial movement relative to the guide rail away from the rotor, as the reduced diameter entrance bore 153a cannot travel over the engaging portions 142a, as they taper outwardly from the remainder of the first locking ring 137a. Therefore, it can be seen that the distance that the inboard brake pad assembly 103a is permitted to travel away from the rotor 104 can be controlled. By varying the dimensions of the components of the first lock arrangement 133a and the second lock arrangement 133b, they can be configured for different disc brakes with varying desired pad clearances. In a typical heavy-vehicle disc brake, the desired pad clearance is a total of 1mm, giving a preferred clearance of around 0.5mm between the inboard brake pad assembly 103a and the rotor 104 and around 0.5mm between the outboard brake pad assembly 103b and the rotor 104. Therefore, in this embodiment, the first bush 145a and the first locking ring 137a are configured such that they can separate by around 0.5mm before the engaging teeth 143a are brought into contact with the first guide rail 129a. As will be appreciated, these dimensions are given as examples and can be varied as required for the particular application.

The first lock arrangement 133a and second lock arrangement 133b also each include a manual release arrangement. Due to the spacing between the flanged end-portion 140a of the first locking ring 137a and the end surface 146a of the first bush 145a, a user can manually release the first lock arrangement 133a if desired. For example, by pushing the flanged end-portion 140a in an axial direction away the rotor, the engaging portions 142a will be free to move radially outwardly so the engaging teeth 143a are no longer engaging the first guide rail 129a. The first bush 145a can then be separated from the first locking ring 137a. This can be useful to, for example, manually rewind the inboard brake pad assembly 103a such that the inboard brake pad 105a, the outboard brake pad 105b and/or the rotor 104 can be replaced when they are fully worn.

In other embodiments, the first lock arrangement 133a and the second lock arrangement 133b can be configured such that once the desired pad clearance is reached, they "lock" and relative axial movement of the first lock arrangement 133a and the first guide rail 129a and relative axial movement of the second lock arrangement 133b and the first guide rail 129a is restricted towards and away from the rotor, until the disc brake 100 is actuated again. This is particularly advantageous, as it helps to prevent the inboard brake pad assembly 103a and the outboard brake pad assembly 103b from moving back towards the rotor 104 between brake operations, due to, for example, vibrations or cornering forces.

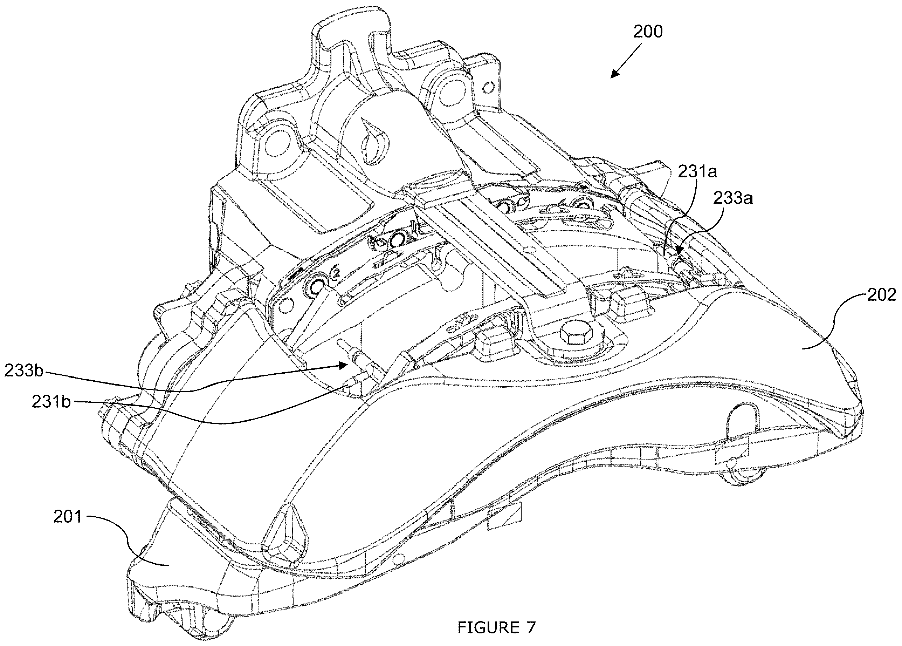

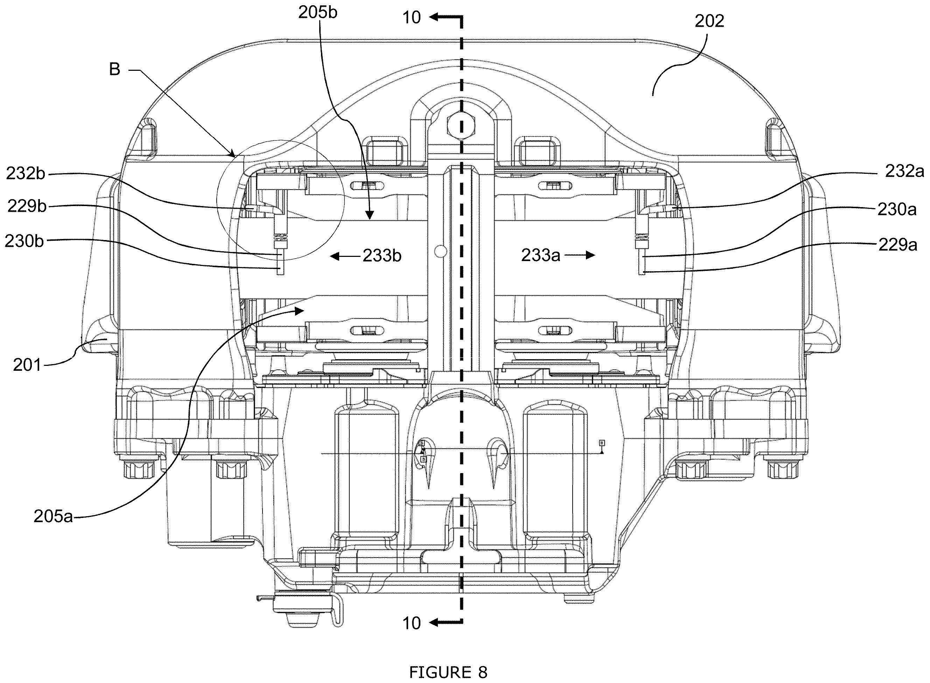

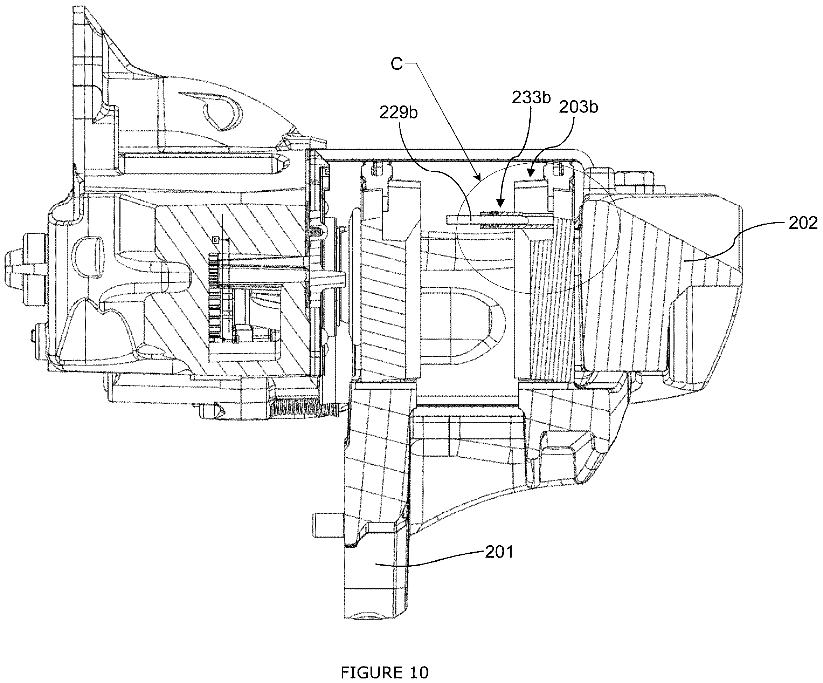

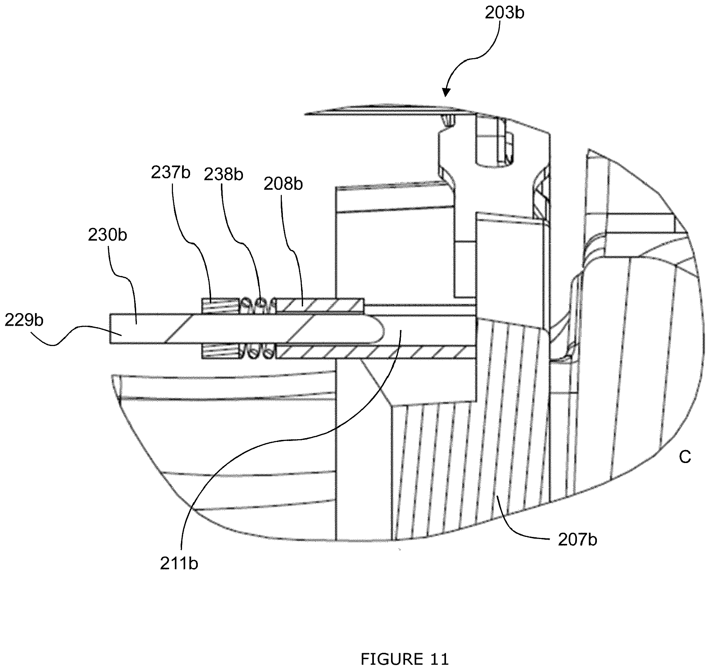

Figures 7 to 11 show an alternative disc brake 200. In this embodiment, a different travel limiting arrangement is provided, which will be described in more detail below. Features in common with the previous embodiment will not be described again and will be indicated in the figures with the same reference number, but with a prefix "2" instead of the prefix of the previous embodiment.

In this embodiment, a first travel limiting arrangement 233a and a second travel limiting arrangement 233b are provided. In this embodiment, the first travel limiting arrangement 233a and the second travel limiting arrangement 233b are located at circumferentially opposite sides of the outboard brake pad 205b. It will be appreciated that, in other embodiments, there could be a single travel limiting arrangement rather than first and second travel limiting arrangements. Also, rather than the travel limiting arrangement being arranged at the outboard brake pad 205b, it could be arranged at the inboard brake pad 205a.

In this embodiment, the first travel limiting arrangement 233a is located on a first guide rail 229a. The second travel limiting arrangement 233b is located on a second guide rail 229b. The first guide rail 229a and the second guide rail 229b are fixed to the brake carrier 201 and, as described in more detail below, provide a link between the outboard brake pad assembly 203b and the brake carrier 201. The first guide rail 229a and the second guide rail 229b are shaped to enable them to extend radially from the carrier and come into contact with a formation extending from the outboard brake pad 205b. In this embodiment, the first guide rail 229a and the second guide rail 229b are each fixed to the brake carrier at a point outboard of the rotor 204. Specifically, the first guide rail 229a has a first guide rail axial portion 230a, a first guide rail radial portion 231a, and a first guide rail circumferential portion 232a adjacent the first guide rail radial portion 231a, intermediate the first guide rail radial portion 231a and the first guide rail axial portion 230a. The second guide rail 229b has a second guide rail axial portion 230b, a second guide rail radial portion 231b, and a second guide rail circumferential portion 232b adjacent the second guide rail radial portion 231b, intermediate the second guide rail radial portion 231b and the second guide rail axial portion 230b. In an alternative embodiment (not shown), the first guide rail 229a and the second guide rail 229b could extend over the rotor 204 and each be fixed to the brake carrier at points inboard of the rotor 204 and outboard of the rotor 204, which further reduces the risk that the first guide rail 229a and the second guide rail 229b will contact the rotor 204 in use, due to cornering forces or vibration causing the first guide rail 229a and the second guide rail 229b to move towards the rotor.

The first guide rail radial portion 231a of the first guide rail 229a is best shown in Figure 7. The first guide rail radial portion 231a projects in a radially outward direction from the carrier 201. The first guide rail circumferential portion 232a extends circumferentially inwardly from the first guide rail radial portion 231a. The first guide rail axial portion 230a extends axially inboard. The first guide rail radial portion 231a projects from the carrier 201 a sufficient amount that the first guide rail circumferential portion 232a and the first guide rail axial portion 230a are located radially outwardly of the rotor 204 and the friction material 209a of the inboard brake pad 205a and the friction material 209b of the outboard brake pad 205b. The second guide rail 229b is identical to the first guide rail 229a and will not be described in more detail. As the first guide rail 229a and the second guide rail 229b are identical, manufacture and assembly are simplified.

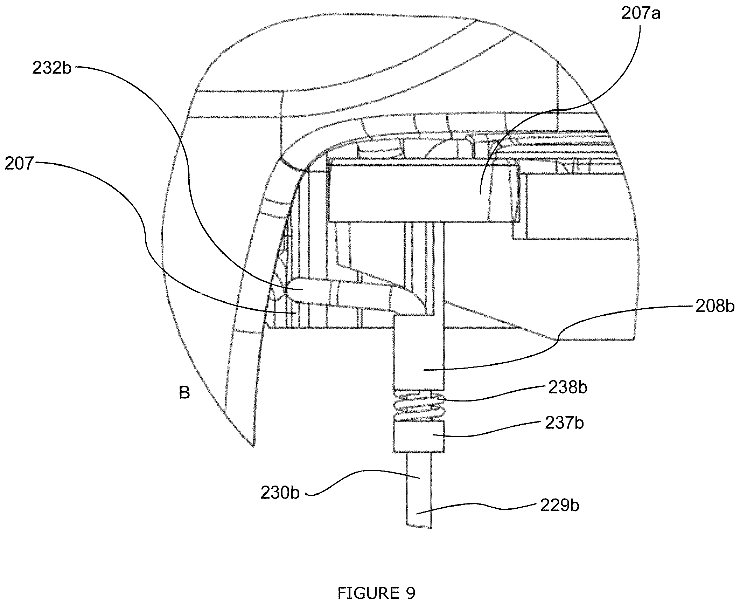

As shown most clearly in Figure 9, the second guide rail 229b acts as a guide surface. The second guide rail 229b locates a slidable element configured to frictionally engage the guide surface such that the slidable element can only slide relative to the guide surface when a frictional force between the slidable element and the guide surface is overcome. As will be described in more detail below, the frictional force required to move the slidable element can be configured such that the slidable element will slide relative to the guide surface during actuation or adjustment of the disc brake 200, which apply a relatively large force to the slidable element. However, the slidable element can also be configured such that when a relatively low force is applied to the slidable element, it will not slide relative to the guide surface. In this embodiment, the slidable element is an annular collar 237b that is received on the second guide rail axial portion 230b of the second guide rail 229b.

As shown most clearly in Figures 9 to 11, the outboard brake pad assembly 203b includes a projection configured to engage the guide surface. In this embodiment, the projection is an axially extending sleeve portion 208b configured to engage the second guide rail 229b. The sleeve portion 208b extends from the backplate 207b of the outboard brake pad 205b. The sleeve portion 208b has an axially extending sleeve portion bore 211b that receives the second guide rail axial portion 230b of the second guide rail 229b in this embodiment. In this embodiment, the sleeve portion 208b is integrally and monolithically formed with the backplate 207b of the outboard brake pad 205b, but in other embodiments the sleeve portion 208b could be a separate component that is fixed to the outboard brake pad 205b. Alternatively, the sleeve portion 208b could be fixed or integrally and monolithically formed with a spreader plate that engages the outboard brake pad 205b. As another alternative, the sleeve portion 208b could be fixed or integrally and monolithically formed with a portion of the caliper 202 that engages the outboard brake pad 205b. The sleeve portion 208b can be slid onto the free end of the second guide rail axial portion 230b of the second guide rail 229b to assemble the arrangement. An identical sleeve portion is provided at the circumferentially opposite side, to contact the first guide rail 229a.

Arranged between the collar 237b and the sleeve portion 208b is a resiliently biased element. The resiliently biased element is configured to be compressed during the braking operation and extend after the braking operation to a limited extent in order to inhibit any sliding of the outboard brake pad assembly 203b away from the rotor relative to the second guide rail 229b that is above a pre-determined amount. After the pre-determined amount of sliding of the outboard brake pad assembly 203b away from the rotor relative to the second guide rail 229b, the resiliently biased element reaches its extension limit and inhibits any further relative sliding of the outboard brake pad assembly 203b and the second guide rail 229b. In this embodiment, the resiliently biased element is configured to compress and extend within an axial range of approximately half of a desired total clearance between the outboard brake pad assembly 203b, the inboard brake pad assembly 203a and the rotor 204. In other words, if the total desired clearance, also known as running clearance, is 1mm, the resiliently biased element is configured to compress and extend within an axial range of approximately 0.5mm. This helps to ensure a suitable clearance on both sides of the rotor 204 after a braking operation.

In this embodiment, the resiliently biased element is a coil spring 238b having a first end and a second end. The first end is fixed to the collar 237b. In this embodiment, the first end is fixed to an outboard-facing surface of the collar 237b and the second end engages an inboard-facing surface of the sleeve portion 208b of the outboard brake pad assembly 203b, which opposes the outboard-facing surface of the collar 237b.

The frictional force required to move the collar 237b relative to the guide rail 239b is configured such that the force of the spring 238b is not sufficient to cause the collar 237b to slide relative to the first guide rail 229a. Accordingly, the collar 237b acts as a reaction surface for the spring 238b when it extends after a braking operation, resulting in the outboard pad assembly 203b, and the caliper 202, being moved relative to the carrier 201 in a direction away from the rotor 204. However, the spring 238b can only extend a limited extent before it reaches its extension limit. At the limit, the outboard pad assembly 203b can no longer move away from the rotor 204 as it is fixed to the spring 238b, which is fixed to the collar 237b. The collar 237b does not slide relative to the second guide rail 229b as the force of the collar 237b is not sufficient to overcome the frictional force between the collar 237b and the second guide rail 229b. When an adjustment mechanism of the brake causes the outboard pad assembly 203b to move towards the rotor in an adjustment operation (via the caliper 202), the spring 238b will only be able to compress a pre-determined amount before it cannot compress any more. When the spring 238b can compress no more, the force applied by the adjustment mechanism that causes the outboard pad assembly 203b to move towards the rotor will be transferred to the collar 237b, overcoming the frictional force and sliding the collar 237b relative to the second guide rail 229b towards the rotor, to reduce the clearance between the outboard pad assembly 203b and the rotor 204 to an acceptable level.

It will be appreciated that the first travel limiting arrangement 233a functions in the same way as the second travel limiting arrangement 233b, so will not be described in detail. Advantageously, having the first travel limiting arrangement 233a and the second travel limiting arrangement 233b helps to ensure a consistent clearance and reduce the risk of brake pad taper wear over the life of the brake 200.

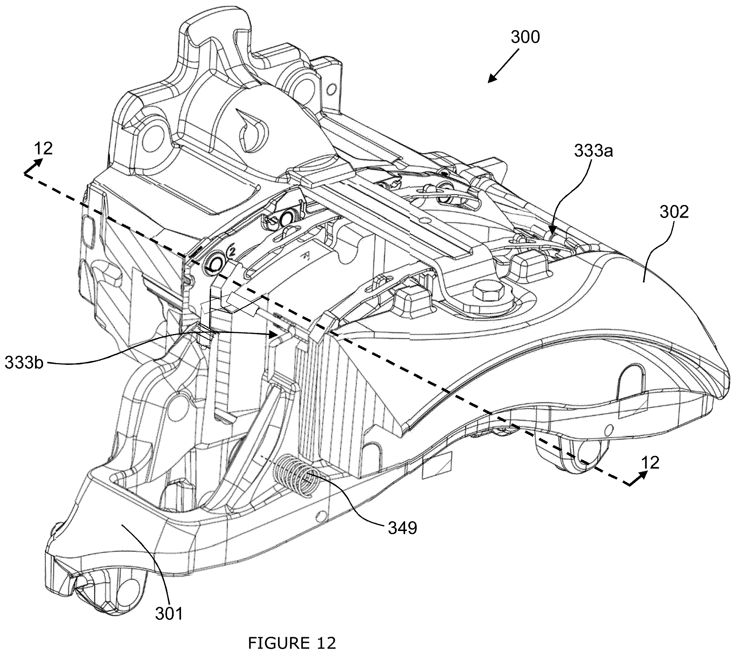

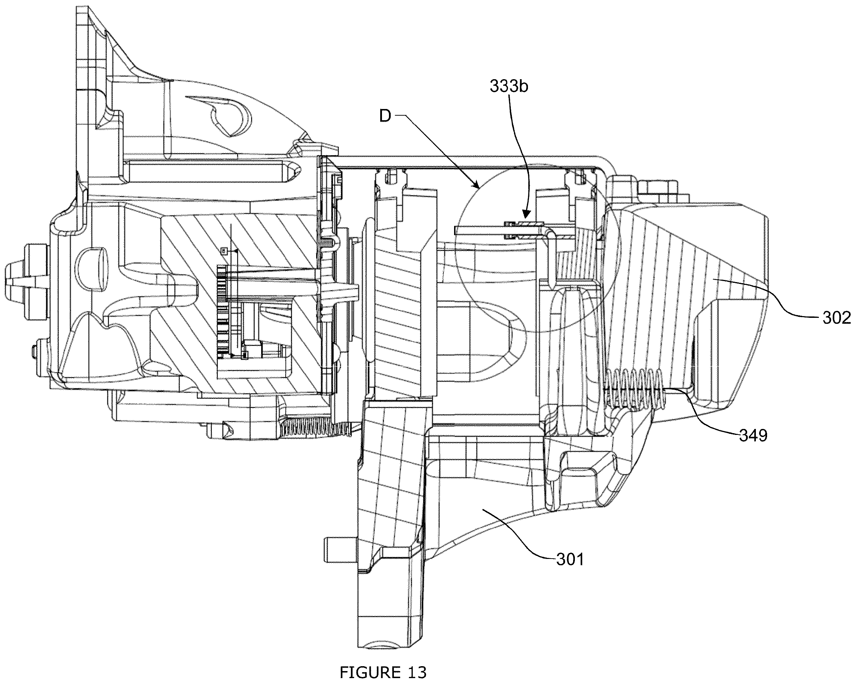

Figures 12 to 14 show an alternative disc brake 300. In this embodiment, a different travel limiting arrangement is provided, which will be described in more detail below. Features in common with the previous embodiment(s) will not be described again and will be indicated in the figures with the same reference number, but with a prefix "3" instead of the prefix of the previous embodiment(s).

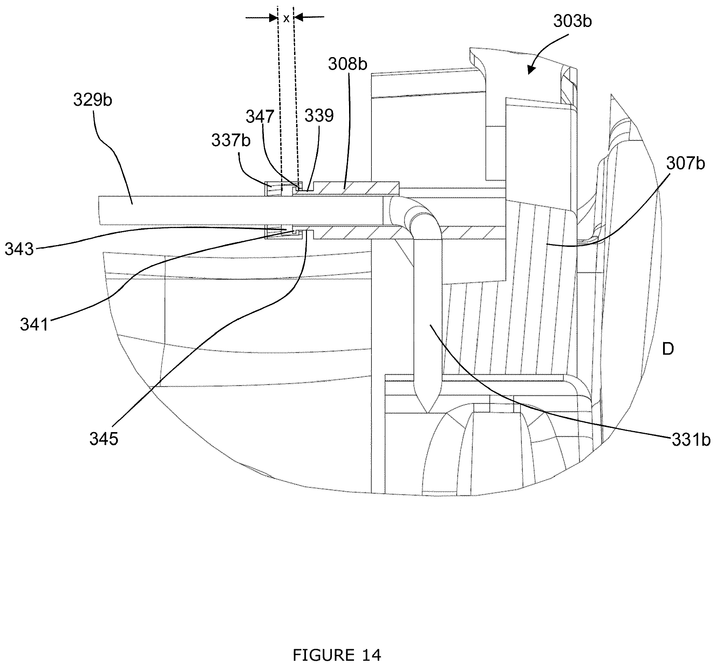

The travel limiting arrangement 333b of the disc brake 300 works in a similar way to the travel limiting arrangement 233b of the disc brake 200, but instead of a resilient element, the travel limiting arrangement 333b has a stop formation and an engagement formation. The engagement formation is configured to engage the stop formation to inhibit any sliding of the outboard brake pad assembly 303b relative to the guide rail 329b that is above a pre-determined amount in an axial direction away from the rotor. As can be seen most clearly from Figure 14, the projection of the outboard brake pad assembly 303b is again a sleeve portion 308b but, in this embodiment, the sleeve portion 308b has an axially extending neck 339. The neck 339 has a reduced diameter relative to the sleeve portion 308b. The neck 339 has a flange portion 341 at its distal end. The flange portion 341 has an increased diameter relative to the neck 339 and the flange portion 341 acts as the engagement portion for the second travel limiting arrangement 333b.

Similarly to the collar 237b of the previous embodiment, as it is annular, the collar 337b has a through bore that is a similar diameter to the second guide rail 329b such that the collar 337b can slide on the second guide rail 329b. However, in this embodiment, the collar 337b also has an increased diameter internal bore portion that defines a chamber 343 within the collar 337b. At an end configured to face the sleeve portion 308b in use, the chamber 343 of the collar 337b has a reduced diameter mouth 345. The mouth 345 has a similar diameter to the neck 339 of the sleeve portion 308b such that the neck 339 can slide within the mouth 345. The flange portion 341 can therefore slide within the chamber 343. The mouth 345 defines a lip 347 that acts as the stop formation. In use, when the flange portion 341 slides within the chamber 343 to a sufficient extent, the flange portion 341 contacts the lip 347 and further relative sliding of the collar 337b and the sleeve portion 308b is inhibited. Accordingly, the outboard brake pad assembly 303b is inhibited from sliding any further from the rotor 304.

As shown in Figure 14, the chamber 343 has an axial length x configured to allow relative sliding of the collar 337b and the sleeve portion 308b to a pre-determined amount to create a sufficient clearance between the outboard brake pad assembly 303b and the rotor 304.

To help urge the outboard brake pad assembly 303b away from the rotor 304 after a braking operation, a biasing element configured to extend after a braking operation is provided. Shown most clearly in Figure 12, in this embodiment, a caliper spring 349 is arranged between the caliper 302 and the carrier 301. The caliper spring 349 is a coil spring with a first end and a second end. The first end engages the carrier 301. The second end engages the caliper 302. During a braking operation, the caliper spring 349 is compressed as an actuation force applied at the inboard side of the brake causes the caliper 302 to slide on the carrier 301 to move the outboard brake pad assembly 303b towards the rotor. After the braking operation, the actuation force is released and the spring force of the caliper spring 349 causes the caliper spring 349 to extend and urge the caliper 302 away from the rotor 304 at the outboard side, creating a clearance between the outboard brake pad assembly 303b and the rotor 304. In alternative embodiments (not shown in the Figures), the caliper spring 349 could be located between a guide pin fixed to the brake carrier 301 and the caliper 302. Advantageously, this location would reduce the risk of contamination of the caliper spring and degradation of its function, as the guide pin arrangement is typically sealed with a sealing element such as a sealing boot.

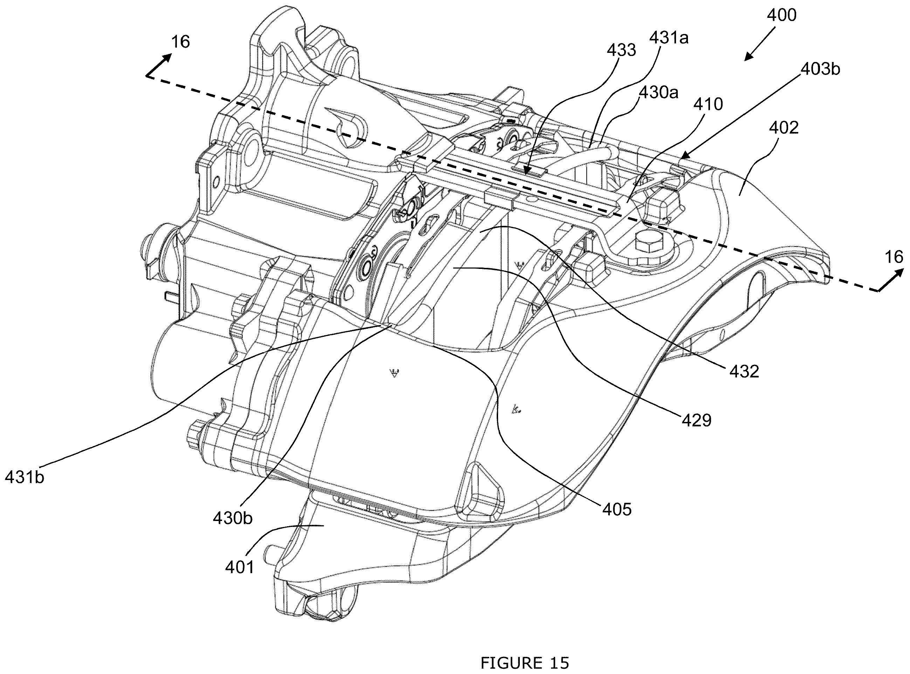

Figures 15 to 17 show an alternative disc brake 400. In this embodiment, a different travel limiting arrangement is provided, which will be described in more detail below. Features in common with the previous embodiment(s) will not be described again and will be indicated in the figures with the same reference number, but with a prefix "4" instead of the prefix of the previous embodiment(s).

The disc brake 400 has a single travel limiting arrangement 433 that is located between the pad retainer 410 and a carrier frame structure. The guide surface for the travel limiting arrangement 433 is the pad retainer 410. The carrier frame structure is fixed to the brake carrier 401 and acts as a link between the travel limiting arrangement 433 and the brake carrier 401. In this embodiment, the carrier frame structure is a support bar 429 having a support bar circumferential portion 432 extending circumferentially across the disc brake 400. In this embodiment, the support bar circumferential portion 432 is axially located intermediate the inboard brake pad assembly 403a and the rotor 404 and radially located intermediate the pad retainer 410 and a radially outer surface of the inboard brake pad assembly 403a. The support bar circumferential portion 432 is connected at each end to a first support bar axial portion 430a and a second support bar axial portion 430b. The first support bar axial portion 430a connects to a first support bar radial portion 431a which is fixed to a first circumferential side of the brake carrier 401. The second support bar axial portion 430b connects to a second support bar radial portion 431b which is fixed to a second circumferential side of the brake carrier 401. In this embodiment, the brake carrier 401 has holes that receive the first support bar radial portion 431a and the second support bar radial portion 431b, for easy assembly. It is not necessary to locate the support bar 429 in a specific axial location so assembly of the support bar 429 to the brake carrier 401 is simple for a user, even when retrofitted to an existing brake carrier 401. Additionally, there is no need for tight tolerances or precision engineering, as the support bar 429 will still perform its function even if slightly axially offset closer or further away from the first brake pad assembly 403a. Further, as the support bar 429 is not centred over the rotor 404, as the rotor 404 and the friction material 407a of the first brake pad 405a and the friction material 407b of the second brake pad 405b wear in use, and the disc brake 400 is adjusted to compensate for this, the travel limiting arrangement 433 will still function.

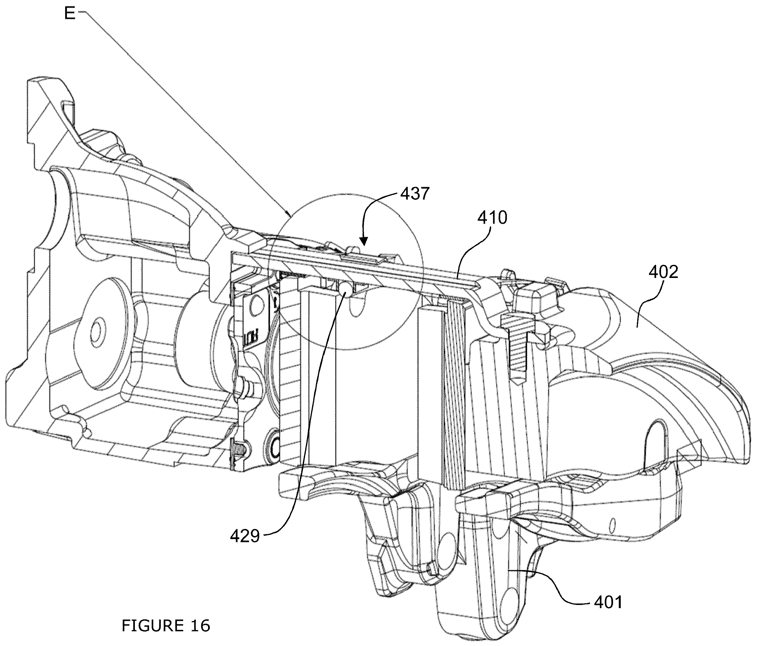

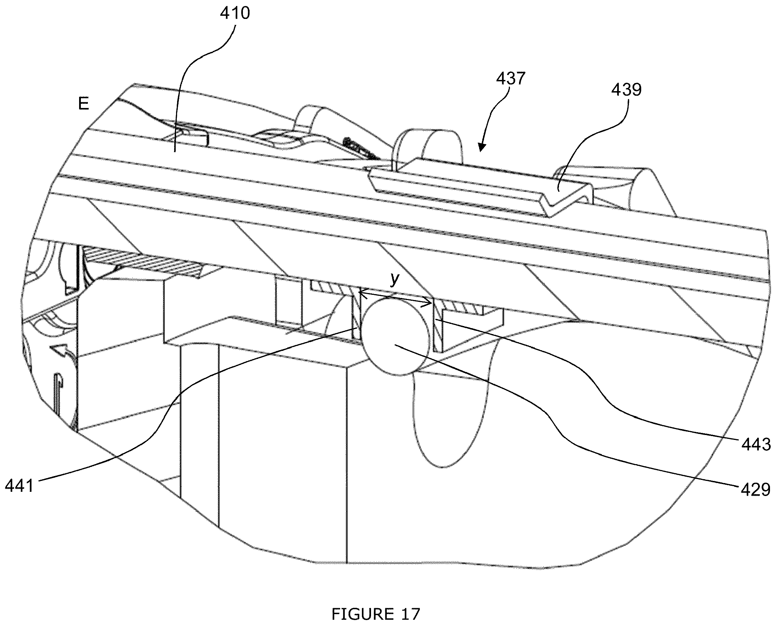

As shown most clearly in Figures 16 and 17, in this embodiment, the travel limiting arrangement 433 has a slidable element in the form of a clip 437. The clip 437 substantially surrounds the pad retainer 410 and has at least one resiliently biased engaging arm 439 for engaging the pad retainer 410 to retain the clip 437 on the pad retainer 410. In this embodiment, first and second engaging arms 439 are provided that extend in a circumferential direction and are biased in a radially inwardly direction to engage a radially outer surface of the pad retainer 410. However, in other embodiments, the engaging arms 439 could engage side surfaces of the pad retainer 410 or a radially inner surface of the pad retainer 410. Further, in this embodiment, the engaging arms 439 are configured to frictionally engage the surfaces of the pad retainer 410 to retain the clip 437 on the pad retainer. In other embodiments, however, the clip 437 and pad retainer 410 could have complementary formations that retain the clip 437 on the pad retainer 410, or a fastening member could fix the clip 437 to the pad retainer 410.

The clip 437 has a first radially extending wall 441 projecting radially inwardly from the clip 437. The clip 437 also has a second radially extending wall 443 projecting radially inwardly from the clip 437. In this embodiment, the first extending wall 441 and the second extending wall 443 oppose one another in the axial direction and define an axial spacing y, as shown in Figure 17. The support bar circumferential portion 432 of the support bar 429 locates between the first extending wall 441 and the second extending wall 443, such that the clip 437 can engage the support bar 429. The spacing y is pre-selected to control the sliding of the clip 437 relative to the pad retainer 410, as described in more detail below.

During a braking operation, after the brake actuation force is released, the outboard pad assembly 403b will move in an axial direction away from the rotor 404. This will also move the caliper 402 relative to the brake carrier 401. As the pad retainer 410 is fixed to the caliper 402, it also moves together with the caliper 402. However, although this force is sufficient to move the caliper 402 relative to the brake carrier 401, it is not sufficient to overcome the friction between the clip 437 and the pad retainer 410. Therefore, the clip 437 does not slide relative to the pad retainer 410 and moves together with the pad retainer 410. When the caliper 402 has slid relative to the brake carrier 401 by a predetermined amount, the first extending wall 441 of the clip 437 will contact the support bar circumferential portion 432 of the support bar 429, as the support bar 429 is fixed to the brake carrier 401 and so does not move in the axial direction. Because of the contact between the support bar circumferential portion 432 of the support bar 429 and the first extending wall 441 of the clip 437, the caliper 402 will move no further in the outboard axial direction. To compensate for this, the inboard brake pad assembly 403a will move away from the rotor 404, creating a suitable clearance between the inboard brake pad assembly 403a, the outboard pad assembly 403b and the rotor 404. During actuation or adjustment of the disc brake 400, the force applied is sufficient to move the clip 437 relative to the pad retainer 410, so the outboard pad assembly 403b can be moved towards the rotor 404.

The second extending wall 443 helps to ensure that the clip 437 is located in the correct axial location when the disc brake 400 is applied again. As the caliper 402 moves relative to the carrier 401 to move the outboard brake pad assembly 403b towards the rotor 404 during a braking operation, the second extending wall 443 will contact the support bar circumferential portion 432 of the support bar 429 and be prevented from moving further away from the support bar 429 than desired.

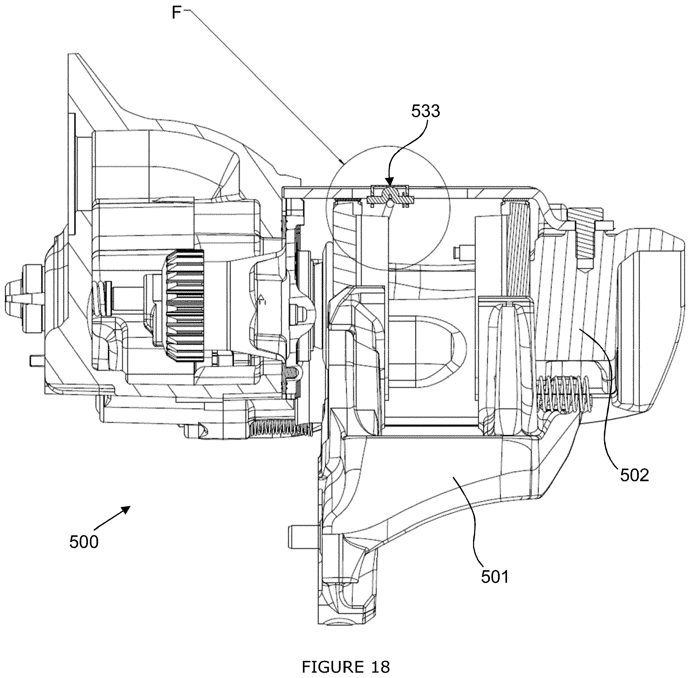

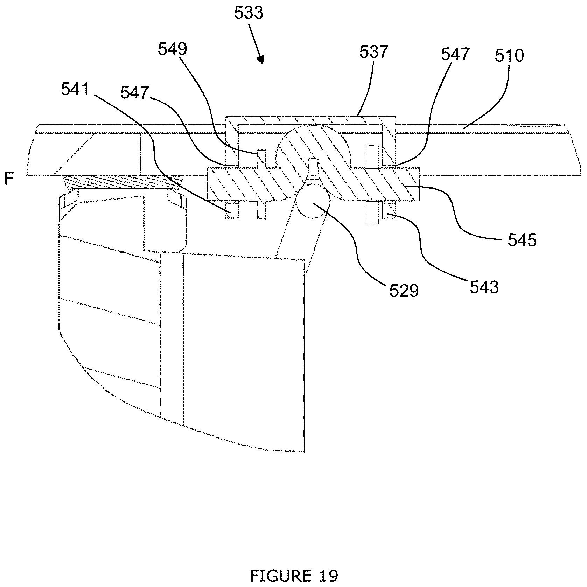

Figures 18 to 19 show an alternative disc brake 500. In this embodiment, a different travel limiting arrangement is provided, which will be described in more detail below. Features in common with the previous embodiment(s) will not be described again and will be indicated in the figures with the same reference number, but with a prefix "5" instead of the prefix of the previous embodiment(s). The travel limiting arrangement 533 of Figures 18 and 19 is similar to the travel limiting arrangement 433 of Figures 14 to 17, except that instead of the clip 537 directly engaging the support bar 529, an intermediate guide piece 545 is provided. As shown most clearly in Figure 19, the guide piece 545 is fixed relative to the support bar 529 and the clip 537 is free to slide on the guide piece via a bearing surface 547 provided in a first extending wall 541 the clip 537 and a bearing surface 547 provided in a second extending wall 543 of the clip 537. A stop 549 is engaged by the first extending wall 541 after the clip 537, which is frictionally fixed to the pad retainer 510, moves in an axially outboard direction after a braking operation, limiting the relative sliding of the caliper 502 relative to the brake carrier 501.

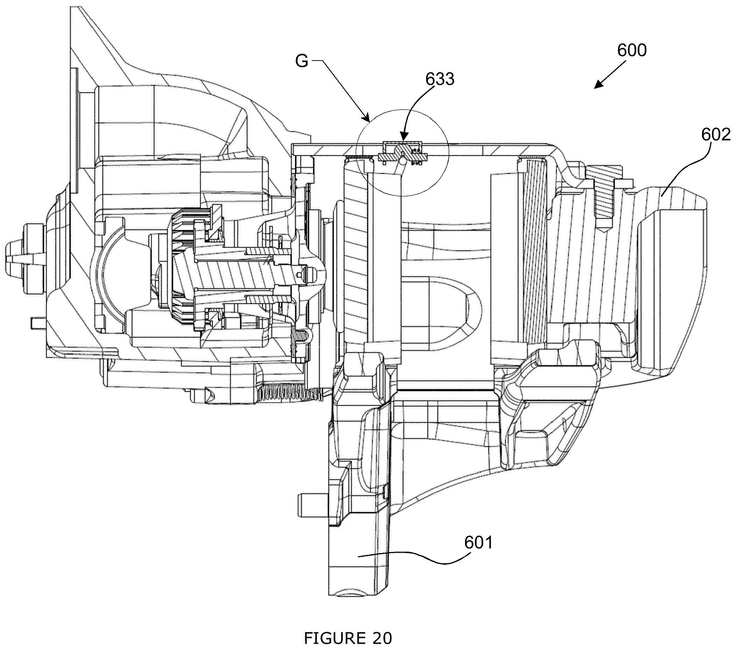

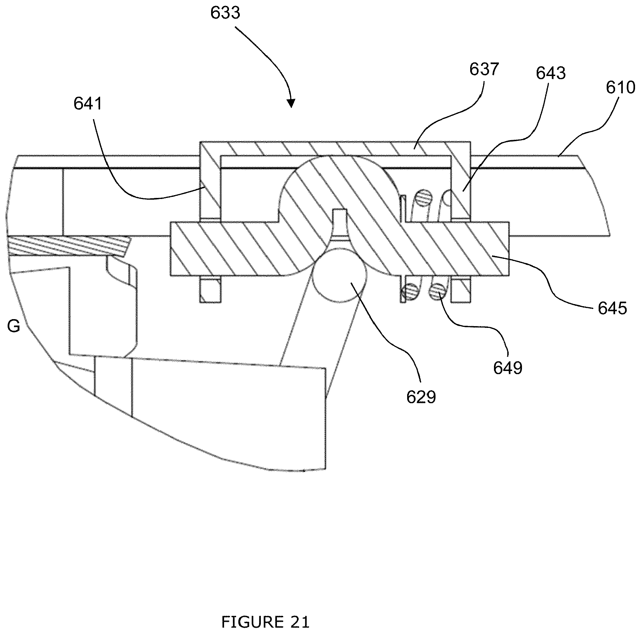

Figures 20 to 21 show an alternative disc brake 600. In this embodiment, a different travel limiting arrangement is provided, which will be described in more detail below. Features in common with the previous embodiment(s) will not be described again and will be indicated in the figures with the same reference number, but with a prefix "6" instead of the prefix of the previous embodiment(s). The travel limiting arrangement 633 of Figures 20 and 21 is similar to the travel limiting arrangement 533 of Figures 18 and 19 except that instead of the stop 549 to limit travel of the clip 537, travel of the clip 637 is limited by a resiliently biased element located between the second extending wall 643 and the guide piece 645. The resiliently biased element is in the form of a spring 649. The spring 649 has a first end that is fixed to the second extending wall 643 and a second end that is fixed to the first extending wall 641. The spring 649 is configured to extend by a limited extent after a braking operation. Once the spring 649 reaches its extension limit, further sliding of the caliper 602 relative to the brake carrier 601 is inhibited.

It will be appreciated that numerous changes may be made within the scope of the present teachings. For example, certain aspects of the teachings may be applicable to other types of brake, such as twin-tappet or electromechanically actuated brakes.

Further, in the first described embodiment, the first guide rail 129a and the second guide rail 129b are located on the inboard side of the brake and project in an axial direction towards the rotor 104. However, it will be appreciated that in other embodiments, the first guide rail 129a and the second guide rail 129b could instead be located on the outboard side of the brake and project from first and second lugs located on the outboard side of the carrier.

As a further alternative, the first and second lugs could project radially from the brake carrier 101 at a location axially closer to the rotor 104. In this alternative, the first guide rail 129a and the second guide rail 129b would instead project from the first and second lugs in an axial direction away from the rotor 104. In the described embodiment, there are first and second guide rails located on a single side of the rotor. In alternative embodiments, there may be only a single guide rail. In further alternative embodiments, there may be a first guide rail on the inboard side of the disc brake and a second guide rail on the outboard side of the disc brake.

In the first described embodiment, the support plate has first and second guide bores that receive the first and second guide rails. However, in alternative embodiments, the support plate could instead have first and second projections that are received in corresponding recesses of the first and second guide rails. For example, each of the first and second guide rails could have an axially extending groove that receives first and second tongues projecting from the support plate.

In another alternative, the support plate could have the first and second guide rails and the first and second locking arrangements could be provided on the carrier, for example on the first and second lugs.

The first and second guide surfaces may not be on first and second guide rails at all. Instead, the first and/or second guide surfaces could simply be axially extending machined surfaces of the carrier. In this configuration, each locking arrangement would be located between the support plate and one of the machined surfaces of the carrier. Rather than a locking ring and bush that surround a guide rail, the lock arrangement could include, for example, a wedge portion slidable relative to the carrier, the wedge portion having engaging portions that are urged to bite into a surface of the carrier after a certain amount of sliding away from the rotor by a tongue projecting from or fixed relative to the spreader plate.

It will be appreciated that the support plate is the spreader plate 113 in the described embodiments, but could instead be a backplate of a brake pad.

The slidable elements, such as the clip 437, 537, 637, the collar 237, 337, or the locking ring 137 could all further comprise a sealing element to inhibit contamination of engaging surfaces of the slidable element and the guide surface. The sealing element could be a housing surrounding the sealing element. Alternatively, or additionally, the sealing element could be a sealing boot fixed to the slidable element and the guide surface.

All embodiments could include a caliper spring, such as the caliper spring 349 shown in Figure 12, for example.

It will be appreciated that in the embodiments above, where the travel limiting arrangement is arranged in relation to the inboard brake pad assembly, the travel limiting arrangement could also be arranged in relation to the outboard brake pad assembly, and vice versa.

## Claims

1. A disc brake for a heavy commercial vehicle, the disc brake comprising:
a brake carrier receiving a first brake pad assembly for contacting a rotor having a central axis defining an inboard-outboard axial direction during a braking operation to slow the vehicle, the first brake pad assembly comprising a support plate;
a guide surface, the first brake pad assembly being configured to slide relative to the guide surface in the axial direction; and
a travel limiting arrangement engaging the guide surface and being configured to inhibit any sliding of the first brake pad assembly relative to the guide surface that is above a pre-determined amount, in a first direction that is away from the rotor in the axial direction.

2. The disc brake of claim 1, wherein the travel limiting arrangement is a lock arrangement comprising a locking element that engages the guide surface, the locking element having:
an unengaged condition where the locking element is free to slide relative to the guide surface; and
an engaged condition where relative sliding between the locking element and the guide surface is inhibited,
wherein the lock arrangement is configured such that a pre-determined amount of relative sliding of the first brake pad assembly relative to the guide surface, in the first direction, causes the locking element to move from the unengaged condition to the engaged condition and inhibit further relative sliding of the first brake pad assembly and the guide surface.

3. The disc brake of claim 2, wherein the lock arrangement further comprises a bush fixed relative to the support plate and arranged between the support plate and the locking element, the bush defining a chamber that locates at least a portion of the locking element.

4. The disc brake of claim 3, wherein the locking element comprises a head portion and a tail portion, the locking element being configured such that when the head portion is contacted, the locking element is in the unengaged condition, and when the tail portion is contacted, the locking element is in the engaged condition, optionally wherein the disc brake is configured such that when the support plate moves in a second direction that is opposite the first direction towards the rotor, the bush contacts the head portion such that the locking element is in the unengaged condition, and when the support plate moves in the first direction away from the rotor, any sliding of the first brake pad assembly relative to the guide surface that is above a pre-determined amount causes the bush to contact the tail portion of the locking element, so the locking element is in the engaged condition and the locking element is inhibited from sliding along the guide surface.

5. The disc brake of claim 4, wherein the tail portion of the locking element comprises a high friction surface, for example extending teeth, configured to contact the guide surface when the tail portion is in the engaged condition, increasing friction between the locking element and the guide surface to inhibit relative movement of the locking element and the guide surface, optionally wherein the tail portion of the locking element comprises two or more engaging portions separated from one another axially, wherein each engaging portion is biased away from the guide surface, optionally wherein the chamber of the bush comprises a ramped portion and the tail portion of the locking element is located within the chamber such that any sliding of the first brake pad assembly relative to the guide surface that is above a pre-determined amount causes the ramped portion of the bush to contact the tail portion of the locking element to move the engaging portions such that they contact the guide surface.

6. The disc brake of any of claims 2 to 5, further comprising a guide rail projecting from the brake carrier in the axial direction, wherein the guide surface is on the guide rail, such that the first brake pad assembly can slide along the guide rail in the axial direction, optionally where the guide rail projects from the brake carrier in the direction of the rotor.

7. The disc brake of claim 6, wherein the first brake pad assembly comprises a first backplate, first friction material mounted on the first backplate and a separate spreader plate configured to engage the first backplate to urge the backplate towards the rotor in the axial direction during the braking operation, optionally wherein the spreader plate is the support plate and comprises a circumferentially extending ear that is arranged to locate radially above the first circumferential abutment surface of the brake carrier, so the spreader plate can engage the guide rail, optionally wherein the spreader plate is integral with a tappet of the disc brake.

8. The disc brake of claim 1, further comprising a caliper configured to slide relative to the brake carrier, the caliper comprising a pad retainer extending axially across an aperture of the caliper to retain the first brake pad assembly, wherein the guide surface is located on the pad retainer.

9. The disc brake of claim 8, wherein the travel limiting arrangement comprises a slidable element configured to frictionally engage the pad retainer such that the slidable element can only slide relative to the pad retainer when a frictional force between the slidable element and the pad retainer is overcome.

10. The disc brake of claim 9, wherein the disc brake further comprises a carrier frame structure fixed relative to the brake carrier, wherein the slidable element is configured to engage the carrier frame structure, optionally wherein the slidable element has at least one radially extending wall.

11. The disc brake of claim 10, wherein the slidable element comprises an engagement formation and the carrier frame structure comprises a stop formation, the engagement formation being configured to engage the stop formation to inhibit any sliding of the first brake pad assembly relative to the pad retainer that is above the pre-determined amount in the first direction, optionally wherein the engagement formation is on the radially extending wall, optionally wherein the radially extending wall is a first radially extending wall and the slidable element further comprises a second radially extending wall.

12. The disc brake of claim 10 or claim 11, wherein the carrier frame structure is a support bar extending circumferentially to engage circumferentially opposite sides of the carrier, optionally wherein the support bar is located radially inwardly of the pad retainer and the radially extending wall extends from the slidable element in a radially inwardly direction so that the slidable element can contact the support bar.

13. The disc brake of any previous claim, further comprising a caliper that slides relative to the brake carrier and a second brake pad assembly, wherein during the braking operation, one of the first or second brake pad assemblies is brought into contact with the rotor and sliding of the caliper relative to the carrier causes the other of the first and second brake pad assemblies to also come in contact with the rotor, optionally wherein the first brake pad assembly is an inboard brake pad assembly, located on an inboard side of the rotor, and the second brake pad assembly is an outboard brake pad assembly, located on an outboard side of the rotor, wherein the outboard brake pad assembly is engaged by the caliper to bring it in contact with the rotor.

14. The disc brake of claim 13, further comprising a biasing element configured to extend after a braking operation to urge the first brake pad assembly away from the rotor in the first direction, optionally wherein the biasing element is arranged between the caliper and the brake carrier, the biasing element being configured to extend after a braking operation to move the caliper relative to the carrier away from the rotor in the first direction.

15. A brake assembly for use in the disc brake of any previous claim, the brake assembly comprising:
a brake carrier receiving a first brake pad assembly for contacting the rotor during a braking operation to slow the vehicle, the first brake pad assembly comprising a support plate;
a guide surface, the first brake pad assembly being configured to slide relative to the guide surface in the axial direction; and
a travel limiting arrangement engaging the guide surface and being configured to inhibit any sliding of the first brake pad assembly relative to the guide surface that is above a pre-determined amount, in a first direction that is away from the rotor in the axial direction.
